# FASCICULE DE BREVET EUROPEEN

(11) **EP 0 044 598 B1**
(45) Date de publication et mention de la délivrance du brevet: **27.03.1985**
(21) Numéro de dépôt: 81200810.0
(22) Date de dépôt: 15.07.1981
(51) Int. Cl.: H04B 3/23

(54) **Dispositif d'annulation d'un signal d'écho composite**
Entzerrungsanordnung für ein zusammengesetztes Echosignal
Cancelling arrangement for a composite echo signal

(30) Priorité: 21.07.1980 FR 8016048
(43) Date de publication de la demande: 27.01.1982
(73) Titulaire: TELECOMMUNICATIONS RADIOELECTRIQUES ET TELEPHONIQUES T.R.T., 75013 Paris (FR)
(72) Inventeur: Guidoux, Loîc Bernard Yves, F-75007 Paris (FR)
(74) Mandataire: Charpail, François

## Description

L'invention concerne un dispositif d'annulation d'écho traitant le signal apparaissant dans une première voie unidirectionelle pour annuler un signal d'écho composite se produisant dans une deuxième voie unidirectionelle en réponse audit signal dans la première voie, ce signal d'écho composite étant formé de plusieurs composantes à caractéristiques différentes, ce dispositif étant formé d'un ensemble d'annuleurs d'écho dont le nombre correspond au nombre desdites composantes et qui sont connectés entre la première voie et l'entrée soustractive de circuits de différence connectés en cascade la deuxième voie, chaque annuleur d'écho comportant un filtre transversal à coefficients réglables commandé par un circuit de réglage des coefficients alors qu'au moins un annuleur d'écho comporte un circuit de compensation d'une composante de signal d'écho.

Un dispositif d'annulation d'écho est utilisé par exemple dans un équipement émetteur-récepteur dont les voies unidirectionelles émission et réception formant ensemble un circuit quatre fils sont souvent couplées par un circuit de couplage, appelé jonction hybride, de façon que l'équipement ait avec l'extérieur un accès deux fils. On sait que lorsqu'on établit une liaison entre deux équipements émetteur-récepteur par leurs accès deux fils, il peut se produire intempestivement dans la voie réception d'un équipement un signal d'écho créé par le signal dans la voie émission du même équipement et dû à des imperfections des jonctions hybrides et/ou des réflexions de signaux dans la liaison. Un annuleur d'écho a pour but d'annuler automatiquement ce signal d'écho intempestif qui apparaît dans la voie réception. L'avantage de cette opération d'annulation d'écho est de permettre une transmission simultanée entre deux équipements émetteur-récepteur reliés par leurs accès deux fils. Ces équipements émetteur-récepteur sont par exemple des modems utilisés en transmission de données.

Suivant la nature du trajet d'écho, qui est le trajet parcouru par le signal de la voie émission pour produire un signal d'écho dans la voie réception, ce signal d'écho peut avoir différentes caractéristiques.

Lorsque dans ce trajet d'écho il ne se produit que des opérations à caractère linéaire et ne faisant pas varier la phase ou la fréquence du signal, on a affaire à un écho dit linéaire qui peut être annulé par un annuleur d'écho formant automatiquement, au moyen d'opérations linéaires sur le signal dans la voie émission, un signal d'écho simulé qui est soustrait du signal dans la voie réception. Ce genre d'annuleur d'écho dit linéaire est bien connu et largement décrit dans la littérature: voir par exemple le brevet français n° 2 377 734.

On peut rencontrer également des trajets d'écho produisant des signaux d'écho ayant d'autres caractéristiques. Quand, par exemple, dans le trajet d'écho est inclus un système à courants porteurs, il peut se produire dans certains cas que le signal d'écho ait une fréquence différente de celle du signal émis et donc une phase variable dans le temps. Il se peut aussi que le trajet d'écho effectue des opérations non linéaires; c'est le cas par exemple, quand le trajet d'écho comporte des systèmes de compression- expansion ne se compensant pas parfaitement ou des amplificateurs produisant de la distorsion harmonique. Lesannuleurs d'écho linéaires classiques ne permettent pas de résoudre de façon satisfaisante le problème de l'annulation d'un écho ayant de telles caractéristiques. Voir par exemple à ce sujet l'article de E. J. Thomas, intitulé »An adaptative Echo Canceller in a Nonideal Environment (Nonlinear or Time Variant)« paru dans Bell System Technical Journal, Vol. 50, n° 8, Octobre 1971, pages 2779-2795. Pour cette raison, sont apparus récemment des annuleurs d'écho spécialisés pour annuler un signal d'écho affecté d'une caractéristique déterminée. Par exemple le brevet américain n° 4 072 830 ou la demande de brevet européen EP-AI-0 036 696, publiée après la date de dépôt de la présente demande, décrivent un annuleur d'écho pour signal d'écho à phase variable. Mais dans la pratique un signal d'écho peut souvent être composite, c'est-à-dire être formé par la somme de plusieurs signaux d'écho à caractéristiques différentes. Ainsi il est rare qu'un signal d'écho à phase variable ne soit pas accompagné d'un signal d'écho à caractère linéaire.

Dans un article intitulé »Echo Cancellation on Time-Variant Circuits« et paru dans la revue Proceed- ings of the IEEE, vol. 65, n° 3, mars 1977, pages 444-453, il est montré un dispositif du genre mentionné plus haut, destiné à l'annulation d'un signal d'écho composite formé d'une composante linéaire et d'une composante avec dérive de fréquence. L'annuleur d'écho linéaire comporte un filtre adaptatif dont la sortie est connectée à l'entrée soustractive d'un circuit de différence et qui est commandé par la sortie de ce circuit de différence. L'annuleur d'écho avec dérive de fréquence comporte un filtre adaptatif qui est directement connecté à l'entrée soustractive d'un autre circuit de différence en cascade avec le précédent et qui est commandé par la sortie de cet autre circuit de différence. Dans cet annuleur d'écho avec dérive de fréquence, un dispositif de compensation de la dérive de fréquence est connecté en amont du filtre adaptatif et rien n'indique de quelle manière ce dispositif de compensation est commandé ni même que sa commande automatique soit prévue. De toutes manières, des variations rapides de phase ne peuvent pas être compensées, comme il est noté à la fin du paragraphe IV, du fait notamment que la compensation de la dérive de fréquence est effectuée en amont du filtre adaptatif. Enfin, on doit remarquer que les deux annuleurs d'écho associés comme le décrit l'article cité, ont des boucles de commande imbriquées de sorte qu'il n'est pas du tout évident qu'en commandant chaque annuleur d'écho à l'aide d'algorithmes connus en soi pour chaque annuleur d'écho, l'ensemble des deux annuleurs d'écho commandés simultanément converge de façon à annuler le signal d'écho résiduel à la sortie du dispositif d'annulation d'écho. L'article précité ne donne pas la moindre indication sur les algorithmes et les moyens à utiliser pour obtenir la convergence de l'ensemble.

La présente invention a donc pour but de fournir des structures et des moyens pratiques à utiliser pour annuler automatiquement un signal d'écho composite, même pour une variation rapide des caractéristiques des composantes de signal d'écho.

Conformément à l'invention un dispositif d'annulation d'un signal d'écho composite est caractérisé en ce que ledit circuit de compensation muni d'un circuit de réglage est inséré soit sur l'entrée additive du circuit de différence correspondant, tous les circuits de réglage de l'ensemble des annuleurs d'écho étant commandés simultanément et, dans chaque annuleur d'écho, les circuits de réglage des coefficients de filtre et dudit circuit de compensation sont commandés automatiquement de façon à rendre minimale une fonction prédéterminée du signal d'écho résiduel apparaissant à la sortie du montage en cascade desdits circuits de différence, soit sur l'entrée soustractive du circuit de différence correspondant, tous les circuits de réglage de l'ensemble des annuleurs d'écho étant commandés simultanément et, dans chaque annuleur d'écho, les circuits de réglage des coefficients de filtre et dudit circuit de compensation sont commandés automatiquement de façon à rendre minimale une fonction prédéterminée du signal d'écho résiduel, apparaissant à la sortie du circuit de différence connecté audit annuleur d'écho, ou à la sortie du montage en cascade desdits circuits de différence.

Le dispositif d'annulation d'écho de l'invention peut être utilisé pour annuler un signal d'écho composite formé d'une composante linéaire et d'une composante à phase variable, ce dispositif comportant alors un annuleur d'écho linéaire et un annuleur d'écho à phase variable.

Selon une variante de l'invention lorsque l'annuleur d'écho à phase variable comporte un circuit de compensation de phase inséré sur l'entrée soustractive de son circuit de différence, le circuit de réglage des coefficients du filtre transversal de l'annuleur d'écho linéaire comporte, pour chaque coefficient Cq(n) à régler, des moyens de multiplication pour former à la cadence 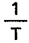 le produit du signal de différence contenant le signal d'écho résiduel et de la valeur conjuguée D^{*}(n-q) d'un échantillon D(n-q du signal complexe de la première voie, qui est stocké dans le filtre transversal, des moyens de calcul pour former à la cadence 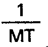 (M entier > 1 ) la moyenne statistique lq(n) du produit précédent, des moyens de multiplication pour former le produit α I_{q}(n), a étant un coefficient inférieur à 1, des moyens enfin pour ᵢncrémenter de alq(n), à la cadence 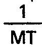 , ledit coefficient Cq(n).

Selon une autre variante de l'invention, lorsque l'annuleur d'écho à phase variable comporte un circuit de compensation de phase de -Φ (n) inséré sur l'entrée additive de son circuit de différence. Φ (n) étant une phase formée par le circuit de réglage dudit circuit de compensation pour être égale à la phase de la composante à phase variable du signal d'écho composite, il est prévu un circuit déphasant de+Φ(n) le signal de différence apparaissant à la sortie du circuit de différence de l'annuleur d'écho à phase variable et le circuit de réglage des coefficients du filtre transversal de l'annuleur d'écho linéaire comporte, pour chaque coefficient cq(n) à régler, des moyens de multiplication pour former à la cadence 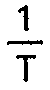 le produit dudit signal de différence déphasé de+ Φ (n) et de la valeurconjuguée D*(n-q) d'un échantillon D(n-q) stocké dans le filtre transversal, des moyens pour former à la cadence 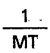 (M entier > 1 ) la moyenne statistique Iq(n) du produit précédent, des moyens de multiplication pourformer le produit α. Iq(n), a étant un coefficient inférieur à 1, des moyens enfin pour incrémenter de αl_{q}(n), à la cadence 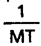 , ledit coefficient cq(n).

Ainsi que cela sera démontré, on obtient en pratique, que dans tous les cas la composante linéaire du signal d'écho composite est annulée à la sortie de l'annuleur d'écho linéaire et qu'à cette sortie on n'obtient plus qu'un signal à phase variable que l'annuleur d'écho à phase variable est capable d'annuler.

La description suivante en regard des dessins annexés, le tout donné à titre d'exemple, fera bien comprendre comment l'invention peut être réalisée.
La figure 1 est un schéma d'un système de transmission pouvant produire un signal d'écho composite.
La figure 2 est un schéma du dispositif de l'invention à structure sérié, utilisant des signaux de différence complexes et s'appliquant à un signal d'écho ayant une composante linéaire et une composante à phase variable. _{'}
Les figures 3 et 4 donnent des modes de réalisation du circuit de réglage de l'annuleur d'écho linéaire du dispositif de la figure 2.
Là figure 5 est un schéma du dispositif de l'invention à structure série et utilisant des signaux de différence réels.
Les figures 6 et 7 sont des schémas du dispositif de l'invention à structure parallèle, correspondant à deux modes de réalisation possibles de l'annuleur d'écho à phase variable.
La figure 8 est un schéma de réalisation globale des filtres transversaux de l'annuleur d'écho linéaire et de l'annuleur d'écho à phase variable.

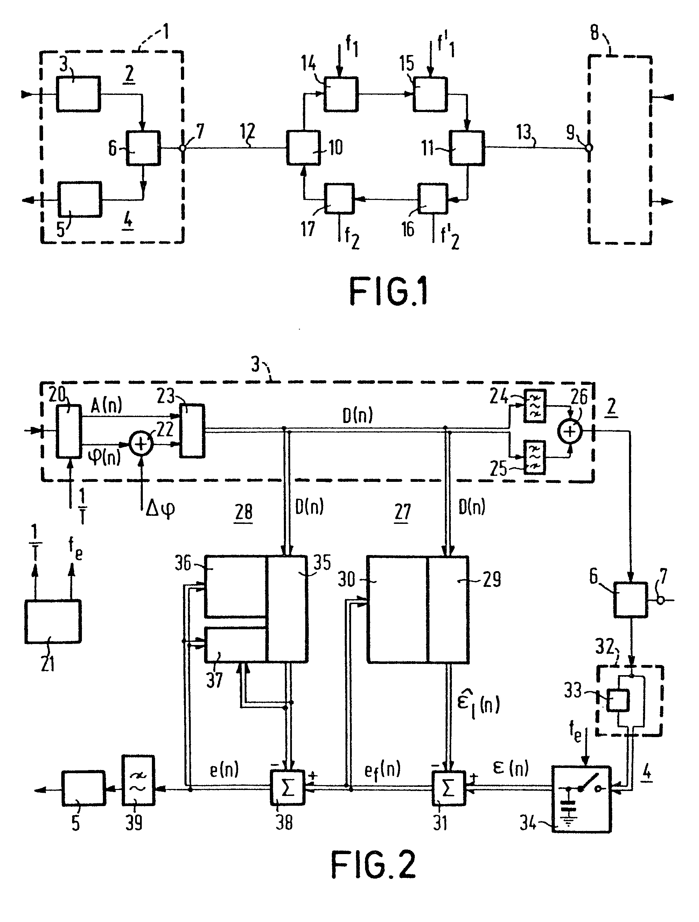

La figure 1 montre à titre d'exemple le schéma de principe d'un système de transmission de données pouvant donner lieu à un signal d'écho composite. Un modem 1 comporte une voie émission 2 munie d'un modulateur 3 recevant des données provenant d'un terminal non représenté et une voie réception 4 munie d'un récepteur 5 fournissant des données à ce terminal. La sortie du modulateur 3 et l'entrée du récepteur 5 sont couplées par l'intermédiaire d'une jonction hybride 6 à l'accès deux fils du modem représenté par la borne 7. Un modem distant 8 comporte les mêmes éléments non représentés et est muni également d'un accès deux fils représenté par la borne 9.

Dans la liaison entre les deux modems, on trouve les lignes de transmission à deux fils 12 et 13 connectées d'un côté aux modems et de l'autre à une section de transmission à quatre fils par des systèmes à courants porteurs. Cette section comporte à ses extrémités deux jonctions hybrides 10 et 11 pour passer de deux fils en quatre fils. La section de transmission par courants porteurs comporte pour un sens de transmission le modulateur 14 et le démodulateur 15 utilisant respectivement les fréquences de modulation f₁ etf;, et pour l'autre sens de transmission un modulateur 16 et un démodulateur 17 utilisant respectivement les fréquences de modulation f2 et f₂.

Lorsqu'un signal de données est émis dans la voie émission 2 du modem 1 en direction du modem 8, il peut se produire dans la voie réception 4 de ce modem 1 un signal d'écho composite résultant de plusieurs trajets d'écho. On suppose d'abord qu'il ne se produit pas d'opérations non linéaires dans la liaison entre les deux modems. Si l'équilibrage de la jonction hybride 6 n'est pas parfait et/ou s'il se produit une réflexion de signal dans la ligne de transmission 12, il apparaît dans la voie réception 4 un signal d'écho linéaire à phase invariable. Si l'équilibrage de la jonction hybride 11 n'est pas parfait et/ou s'il se produit une réflexion de signal dans la ligne de transmission 13, et si de plus dans le système à courants porteurs les fréquences fₜ, f; et f₂, f2 sont telles que 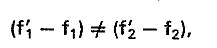 il apparaît dans la voie réception 4 un signal d'écho affecté de dérive de fréquence, de quelques Hz par exemple, et ayant donc une phase variable avec le temps. Ces trajets d'écho coexistent souvent de sorte qu'il apparaît dans la voie réception 4 un signal d'écho composite ayant une composante linéaire et une composante à phase variable. Ces composantes pourraient être affectées de plus de non linéaires dans le cas où des opérations non linéaires seraient effectuées sur les trajets correspondants de signal d'écho.

L'invention fournit un dispositif à inclure dans le modem 1 pour annuler un signal d'écho composite se produisant dans la voie réception 4. On décrit en détail par la suite le cas où le signal d'écho composite comporte une composante linéaire et une composante à phase variable.

Sur la figure 2 est représenté un schéma d'un mode de réalisation du dispositif d'annulation d'écho de l'invention, ayant une structure dite série. A ce dispositif sont associés des éléments du modem 1 déjà représentés sur la figure 1 et munis des mêmes références. On suppose, à titre d'exemple, que ce modem utilise pour la transmission des données la modulation de phase ou de phase et d'amplitude d'une porteuse et que, pour former le signal de porteuse modulée, on utilise dans le modulateur 3 une modulation numérique connue sous le nom de modulation d'écho.

Sous la forme simplifiée représentée, le modulateur 3 comporte un circuit de codage 20 recevant les données à transmettre et fournissant une paire de signaux représentatifs des amplitudes A(n) et des changements de phase p(n) à attribuer à la porteuse en fonction des données, à des instants nT déterminés par le générateur 21 de la fréquence 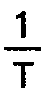 , 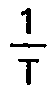 étant la cadence de modulation et n étant un nombre entier variable de -∞ à +∞. Pour tenir compte de la variation de phase Δ ϕ de la porteuse pendant chaque intervalle de modulation T, on utilise un circuit additionneur 22 pour former à chaque instant nT la somme p(n) + Δ ϕ qui est représentative de la phase absolue ψ(n) de la porteuse modulée à émettre. Les deux signaux représentatifs de l'amplitude A(n) et de la phase absolue ψ(n) de la porteuse sont appliqués au circuit 23 qui forme la composante réelle A(n) . cos ψ(n) et la composante imaginaire A(n) - sin ψ(n) du signal complexe de module A(n) et d'argument ψ(n). Ces deux composantes sont appliquées aux filtres passe-bande 24 et 25 dont les signaux de sortie sont additionnés dans le circuit additionneur 26 pour former le signal analogique de porteuse modulée qui est dirigé vers l'accès d'émission de la jonction hybride 6.

On utilise dans le dispositif de l'invention le signal complexe dont les composantes réelle et imaginaire sont disponibles dans l'exemple choisi à la sortie du circuit 23 et qui est représentatif de l'amplitude A(n) et de la phase absolue ψ(n) de la porteuse à émettre aux instants nT. Ce signal complexe ainsi défini est appelé par la suite signal complexe de données ou signal de données ou signal de données et est noté D(n). Dans le cas où, avec un modulateur 3 d'un autre type, les composantes réelle et imaginaire de ce signal complexe D(n) ne se trouveraient pas disponibles, il serait toujours possible d'incorporer dans l'annuleur d'écho des circuits formant ces composantes à partir des données brutes à transmettre.

On doit noter ici que dans les différents schémas représentés par la suite, les liaisons indiquées par un trait double transportent les deux composantes réelle et imaginaire d'un signal complexe, mais, pour simplifier les explications, on ne parlera souvent par la suite que des signaux complexes transportés par ces liaisons. De même, lorsque des signaux complexes sont appliqués à des circuits de traitement, il est entendu que ces traitements sont effectués en pratique à partir de leurs composantes réelles et imaginaires qui sont des signaux réels et on n'explicitera généralement pas les traitements effectués en pratique, étant donné qu'ils résultent de formules bien connues dans la notation des nombres complexes.

A l'accès réception de la jonction hybride 6, il apparaît, en réponse au signal fourni par le modulateur 3, un signal d'écho composite formé comme on l'a expliqué au moyen de la figure 1 et comportant une composante linéaire et une composante à phase variable.

Pour annuler ce signal d'écho composite, le dispositif d'annulation d'écho de l'invention comporte deux annuleurs d'écho 27 et 28 traitant le signal complexe D(n) échantillonné aux instants nT et que l'on suppose par exemple de type analogique.

L'annuleur d'écho 27 est construit pour annuler un signal d'écho linéaire. Il comporte un dispositif de traitement réglable 29 qui est un filtre transversal et qui est muni d'un circuit de réglage 30 pour régler les coefficients de ce filtre. Le signal complexe variable sortant du filtre transversal 29 est appliqué à l'entrée (-) du circuit de différence 31. A l'entrée (+) de ce circuit de différence 31 sont appliqués des échantillons d'un signal complexe analogique, formé à partir du signal apparaissant à l'accès réception de la jonction hybride 6. Pour former ces échantillons on utilise un circuit 32 qui fournit un signal complexe dont la partie réelle est le signal provenant de la jonction hybride 6 et dont la partie imaginaire est ce même signal déphasé de 90° au moyen du circuit déphaseur 33. Le signal complexe fourni par le circuit 32 est appliqué à un circuit d'échantillonnage et de maintien 34 dans lequel l'échantillonnage est effectué à une fréquence fₑ fournie par le générateur 21. Cette fréquence d'échantillonnage fₑ est multiple de la fréquence de modulation 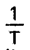 et est telle que le théorème de Shannon soit respecté vis à vis du signal d'écho composite, c'est-à-dire du signal émis par le modulateur 3. Toutefois, pour simplifier les formules donnant les calculs à effectuer, on ne considère par la suite, parmi les échantillons fournis par le circuit 34, que ceux se produisant à la fréquence 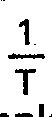 , aux mêmes instants nT que les échanₜil- lons du signal de données D(n). Lesignal de différence complexe fourni par le circuit de différence 31 est appliqué au circuit de réglage 30, dans lequel il est utilisé, comme on l'expliquera par la suite, pour régler les coefficients du filtre transversal 29.

L'annuleur d'écho 28 est construit pour annuler un signal d'écho à phase variable. Il peut être réalisé suivant des techniques connues: notamment, celles décrites dans le brevet américain 4 072 830 ou dans la demande de brevet européen EP-AI-0 036 696. Sous la forme simplifiée représentée, l'annuleur d'écho 28 comporte un dispositif de traitement réglable 35 qui reçoit le signal de données D(n) et qui est chargé de fournir un signal complexe à phase variable. Ce dispositif de traitement 35 se compose pour cela d'un filtre transversal en série avec un circuit déphaseur, ces deux éléments n'ayant pas été distingués sur le schéma. Les coefficients du filtre transversal sont réglés au moyen du circuit de réglage de coefficients 36 tandis que le déphasage effectué par le circuit déphaseur est réglé au moyen du circuit de réglage de phase 37. Le signal complexe à phase variable fourni par le dispositif de traitement 35 est appliqué à l'entrée (-) du ciccuit de différence 38. L'entrée (+) de ce circuit de difference 38 est connectée à la sortie de l'autre circuit de différence 31. Le signal de différence complexe fourni par le circuit de différence 38 est appliqué au circuit de réglage de coefficients 36 et au circuit de réglage de phase 37, ce dernier recevant également le signal de sortie du dispositif de traitement 35.

Dans la structure du dispositif d'annulation d'écho de la figure 2 et qui est appelée structure série, les circuits de réglage des annuleurs d'écho 27 et 28 sont commandés chacun par le signal de différence engendré dans chaque annuleur d'écho, de façon à rendre minimal le signel d'écho résiduel qui y est présent. En particulier, dans l'annuleur d'écho 27, le circuit de réglage 30 des coefficients du filtre 29 est commandé par le signal fourni par le circuit de différence 31 et qui contient un signal d'écho résiduel composite. Or, on décrira parla suite différents algorithmes de réglage des coefficients du filtre 29 à mettre en oeuvre dans le circuit 30, permettant tous que la composante linéaire du signal d'écho composite soit annulée dans le signal de différence fourni par le circuit 31 et permettant que ce signal de différence ne contienne plus qu'un signal à phase variable que l'annuleur d'écho à phase variable 28 est naturellement capable d'annuler.

Du signal complexe fourni par le circuit de différence 38 et débarrassé de tout signal d'écho, le récepteur 5 du modem n'utilise que là composante réelle préalablement filtrée dans le filtre passebas 39.

Il n'est pas nécessaire de décrire en détail la constitution des filtres transversaux utilisés dans le dispositif de l'invention. On sait qu'un filtre transversal tel que le filtre 29 comporte des moyens (par exemple une ligne à retard) pour stocker un certain nombre d'échantillons successifs du signal complexe D(n) appliqué à son entrée, des moyens de calcul pour pondérer ces échantillons successifs par les coefficients complexes fournis par le circuit de réglage 30 et pour former la somme de ces échantillons pondérés. Comme sur la figure 2, on a supposé que le dispositif d'annulation d'écho travaille sur des échantillons de signaux analogiques, les filtres transversaux utilisés doivent être de type analogique et on peut les réaliser par exemple au moyen de dispositifs connus sous le nom de CCD (en anglais »Charge-Coupled-Device«). Mais bien entendu on pourraît aussi utiliser des filtres transversaux numériques en effectuant les conversions convenables de signaux.

On va maintenant décrire des algorithmes de modification des coefficients du filtre 29, à mettre en oeuvre dans le circuit de réglage 30 pour obtenir le résultat énoncé ci-dessus, à savoir que l'annuleur d'écho 27 annule la composante linéaire du signal d'écho composite et fournit un signal à phase variable que l'annuleur d'écho 28 peut annuler.

Pour simplifier les explications et les calculs, on suppose, suivant une pratique courante, que seul le modem local émet et donc qu'à la voie réception 4 de ce modem n'est appliqué que le signal d'écho composite produit par le modulateur 3 et pas de signal de données provenant du modem distant. On définit d'abord les grandeurs, signaux et notations qui sont utilisés par la suite. Aux instants d'échantillons nT:
e(n) est le signal complexe d'écho composite fourni par le circuit d'échantillonnage 34.
εₗ (n) est un signal complexe qui est la partie linéaire du signal d'écho composite e(n).
ε_{f} (n) est un signal complexe qui est la partie à phase variable du signal d'écho composite c(n).
Φ(n) est la phase du signal d'écho à phase variable.
ε_{P}(n) est le signal complexe fourni par le filtre transversal 29 de l'annuleur d'écho linéaire 27.
e_{f} (n) est le signal de différence complexe qui est fourni par le circuit de différence 31 et qui ne comporte qu'un signal d'écho dans le cas que l'on envisage. Ce signal de différence qui est appliqué au circuit de réglage 30 est appelé aussi signal d'erreur de l'annuleur d'écho 27.
e (n) est le signal de différence complexe qui est fourni par le circuit de différence 38 qui est appelé aussi signal d'erreur de l'annuleur d'écho 28.

Il résulte de la définition du signal d'écho composite que l'on peut écrire:

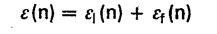

Par ailleurs le filtre transversal 29 stocke à un instant nT, N échantillons précédents du signal de données complexe D(n) appliqué à son entrée, ces échantillons pouvant s'écrire D(n-q) avec q entier variable de D à N-1. En utilisant la notation vectorielle, ces N échantillons D(n-q) peuvent être considérés comme les composantes d'un vecteur D(n) tel que:

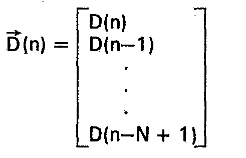

De même les N coefficients cq(n) à un instant nT du filtre transversal peuvent être considérés comme les composantes d'un vecteur c̅ (n) tel que:

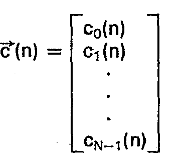

Les transposés c (n) et D(n) des vecteurs c(n) et D(n) s'écrivent respectivement:

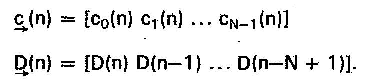

On sait que chaque échantillon du signal εₗ(n) fourni par le filtre transversal 29 résulte de l'opération de convention:

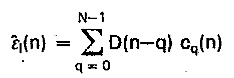

Cette opération s'écrit plus simplement en notation vectorielle:

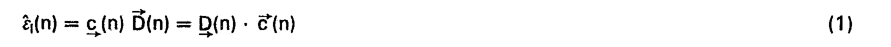

On peut écrire avec des notations analogues le signal complexe d'écho linéaire εₗ(n) et le signal complexe d'écho à phase variable ε_{f}(n) formant ensemble le signal d'écho composite.

Si l'on appelle h la réponse impulsionnelle du trajet auquel est appliqué le signal de données D(n) pour donner le signal complexe d'écho linéaire εₗ(n) on peut définir un vecteur h ayant comme composantes les valeurs hq de cette réponse impulsionnelle aux instants qT. h étant le transposé du vecteur h, le signal d'écho linéaire εₗ(n) peut s'écrire:

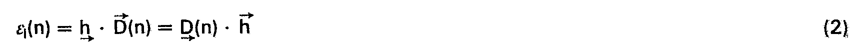

Si l'on appelle k la réponse impulsionnelle du trajet auquel est appliqué le signal de données D(n) pour donner le signal complexe d'écho à phase variable ε_{f}(n), on peut définir également un vecteur k ayant comme composantes les valeurs k_{q} de cette réponse impulsionnelle aux instants qT. k étant le transposé du vecteur k et en tenant compte de la phase variable Φ(n) produite par ce trajet de signal d'écho, le signal d'écho à phase variable e_{f}(n) peut s'écrite:

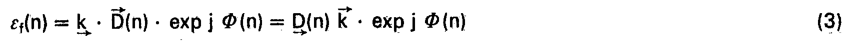

On peut faire au sujet de la phase variable Φ (n) du signal d'écho les remarques suivantes: on suppose par la suite que la phase Φ (n) utilisée dans la formule (3) et qui est variable dans le temps (c'est-à-dire dépend de n) répond à la condition que sa moyenne temporelle est nulle. Cette condition peut s'écrire:

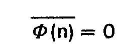

Dans ce mode d'écriture souvent utilisé par la suite, la barre indique que l'on prend la moyenne temporelle de la quantité au-dessus de laquelle elle est placée.

Cette condition est vérifiée notamment dans le cas pratique expliqué au moyen de la figure 1, où la phase variable Φ (n) est produite par une dérive de la pulsation ω de la porteuse; si Δ ω est la variation constante de cette pulsation pendant chaque intervalle de temps T, on a en effet 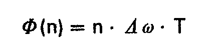 et la moyenne temporelle Φ (n) est évidemment nulle.

Dans le cas où la moyenne temporelle de la phase variable Φ (n) n'est pas nulle, mais est égale à une phase fixe Φ₀, on peut encore se ramener par des changements de variables dans la formule (3) au cas où la moyenne temporelle d'une phase variable est nulle. En effet cette formule (3) peut s'écrire: 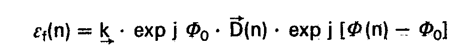 Il en résulte qu'en remplaçant dans la formule (3) 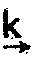 par 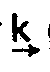 exp · j Φₒ, il y figure une phase Φ(n)-Φo dont la moyennne temporelle est nulle.

Dans une première variante du dispositif d'annulation d'écho de la figure 2, le critère utilisé dans le cir cuit 30 pour le réglage des coefficients c (n) est la minimisation de la quantité r(n) telle que:

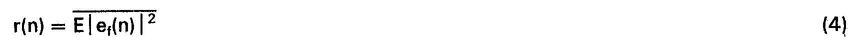

Dans cette expression E est un opérateur indiquant la moyenne statistique de la quantité qui suit. Autrement dit, selon ce critère la quantité r(n) rendre minimale est la moyenne temporelle de la valeur quadratique moyenne du signal d'erreur e_{f}(n).

Il est connu que si on utilise l'algorithme du gradient pour rendre minimale la quantité r(n), on est conduit à régler les coefficients c̅ (n) du filtre suivant la formule de récurrenoe suivarate, reliant les coefficients c̅ⁱ(n) à la récurrence i, aux coefficients c̅ⁱ⁺¹ (n) à la récurrence i + 1: 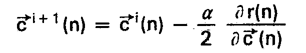 soit:

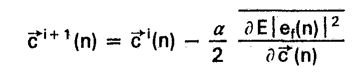

Dans cette formule (5), a est un coefficient inférieur à 1 qui intervient dans la grandeur de modification des coefficients, cette modification étant calculée à chaque récurrence i.

Pour mettre en oeuvre de façon pratique la formule de récurrence (5), on va exprimer la dérivée partielle 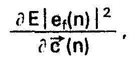 sous une forme faisant apparaître des opérations simples sur des signaux.

On voit aisément que le signal d'erreur e_{f}(n) a pour expression: 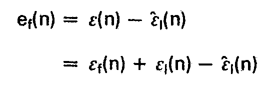 soit, en utilisant les formules (1) et (2): 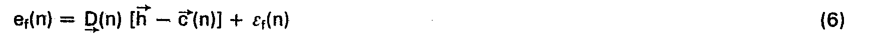 Pour calculer la dérivée partielle 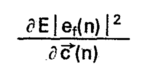 on pose: 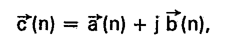 a̅ (n) et b̅(n) étant des vecteurs dont les composantes sont respectivement la partie réelle et la partie imaginaire des coefficients complexes c̅(n).

Par la suite la conjuguée d'une quantité complexe est notée en munissant cette quantité complexe d'une astérisque en indice.

Comme |e_{f}(n)|² = e_{f}(n) · e_{f}(n), on peut écrire:

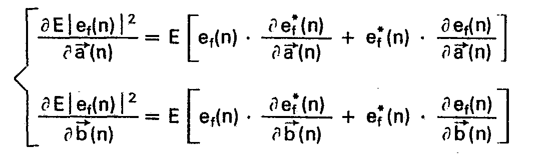

D'autre part, en tenant compte de la formule (6), on peut écrire:

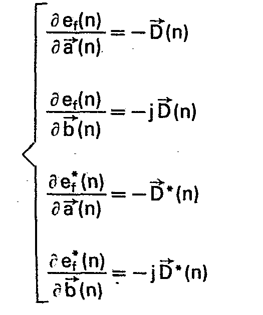

Par des calculs simples on peut en déduire

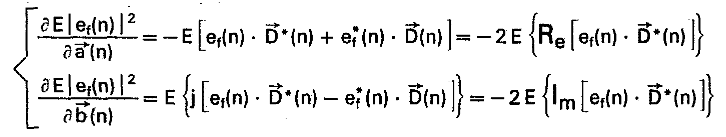

Dans ces dernières formules Rₑ et Iₘ signifient partie réelle et partie imaginaire de la quantité complexe entre crochets qui suit.

En posant 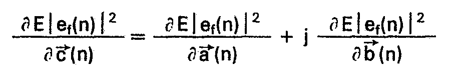 on obtient:

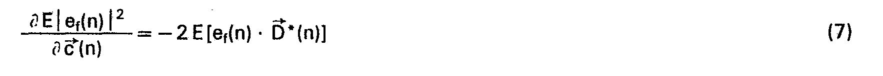

En tenant compte de la formule (7) la formule de récurrence (5) donnant la loi de modification des coefficients c̅(n), s'écrit finalement:

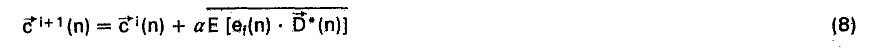

On va maintenant montrer que lorsque l'on applique cette formule de récurrence (8), avec un nombre de récurrence i tendant vers l'infini, les coefficients c̅(n) du filtre transversal 29 tendent vers les échantillons h de la réponse impulsionnelle du trajet d'écho linéaire, ce qui signifie d'après la formule (6) que le signal d'erreur e_{f}(n) ne contient que la composante à phase variable ε_{f}(n) du signal d'écho composite et que la composante linéaire eₗ(n) est annulée. Pour faire cette démonstration on va évaluer la quantité J(n) à calculer à chaque récurrence i pour modifier les coefficients c'(n):

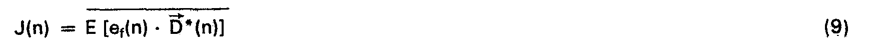

On évalue d'abord la quantité I(n) telle que:

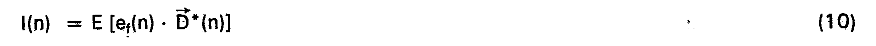

En tenant compte des formules (3) et (6) cette quantité I(n) peut s'écrire:

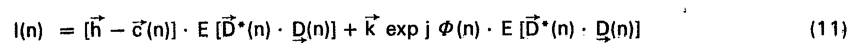

Dans les deux termes de cette expression de I(n) il apparaît la quantité 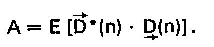 Cette quantité A est une matrice dont les composantes sont:

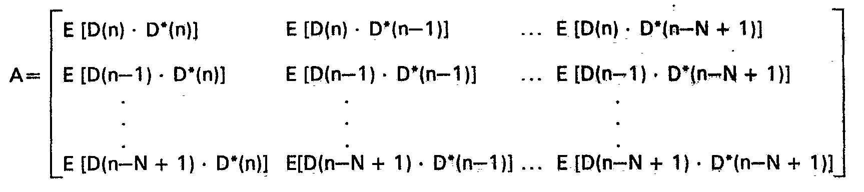

Dans cette matrice toutes les composantes autres que celles de la diagonale sont nulles, puisqu'elles sont chacune la moyenne statistique d'un produit de deux facteurs représentant les données émises à des instants différents et n'ayant donc aucune corrélation entre eux. Les composantes de la diagonale sont égales à une même constante qui représente la puissance des données émises et que l'on suppose par la suite normalisée à 1. La quantité A est ainsi égale à la matrice identité et la formule (11) se réduit donc à:

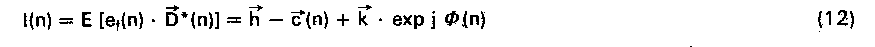

La quantité J(n) à calculer récurrence i est donc d'après la formule (9) la moyenne temporelle de la quantité I(n) donnée à la formule (12). En tenant compte du fait que h et k sont invariants dans le temps et que c̅(n) l'est aussi pratiquement si l'on suppose que le rythme de modification des coefficients c̅(n) est très faible, on peut écrire:

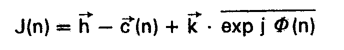

Or, comme on l'a expliqué plus haut, on se place dans l'hypothèse où Φ(n) = 0, ce qui entraîne que

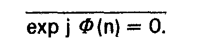

Il en résulte que J(n) =h̅ - c̅(n) et que pour la récurrence i, cette quantité a la valeur h̅- c̅ⁱ(n). La for₋ mule de récurrence (8) peut donc s'écrire: 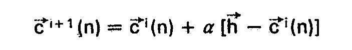 soit:

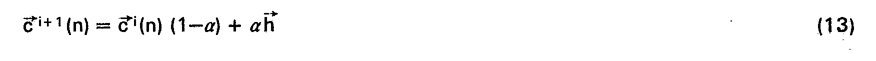

Cette dernière expression (13) de la formule de récurrence (8) revêt la forme classique 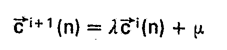 avec λ= (1-a) et µ = ah et l'on sait que pour i tendant vers l'infini, on peut écrire: 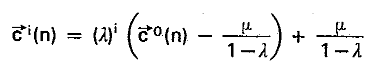 (λ)ⁱ signifiant λ à la puissance i.

En appliquant ce résultat à la formule de récurrence (13), on voit aisément que pour i tendant vers l'infini, les coefficients c̅ⁱ(n) peuvent s'écrire: 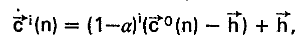 c̅^{o}(n) correspondant à l'initialisation retenue pour les coefficients à la récurrence i = 0. Comme on a choisi 0 < a < 1, on voit que pour i tendant vers l'infini les coefficients c̅ⁱ(n) tendent vers h.

Ceci signifie qu'en mettant en oeuvre dans l'annuleur d'écho 27, la formule de récurrence (8), on obtient pratiquement, après un certain nombre de récurrences, l'annulation de la composante linéaire εₗ(n) du signal d'écho composite dans le signal de différence fourni par le circuit 31; ce signal de différence ne contient alors pratiquement plus que la composante à phase variable e_{f}(n) du signal d'écho composite. L'annuleur d'écho 28 construit pour annuler un écho à phase variable permet alors l'élimination de tout signal d'écho à l'entrée du récepteur (5).

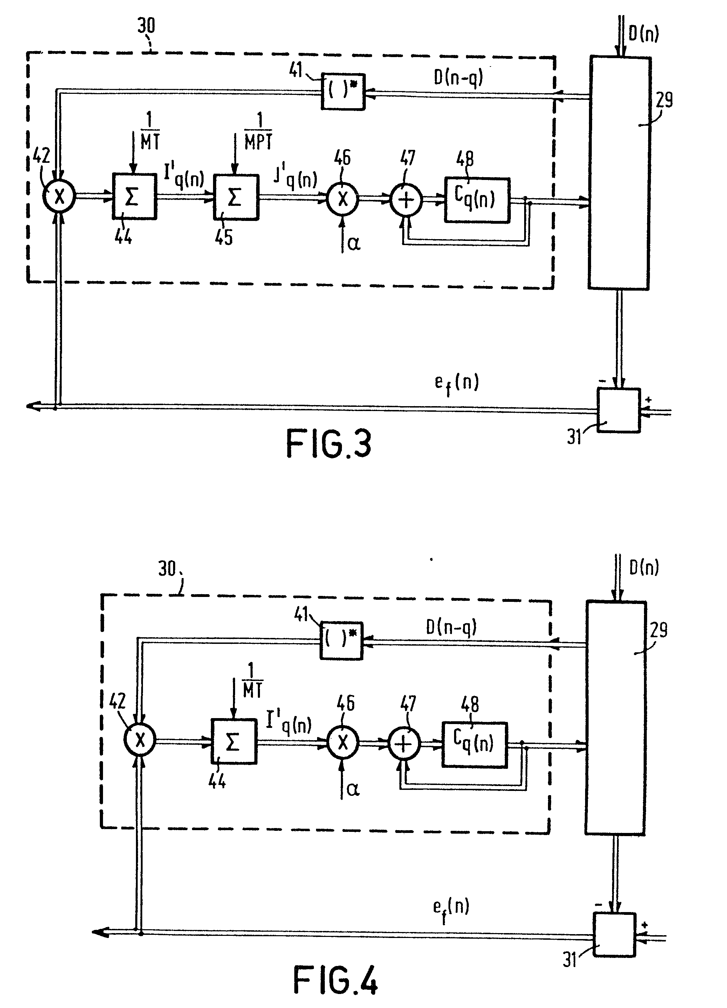

On va maintenant expliquer à l'aide de la figure 3 comment peut être mise en oeuvre dans le circuit de réglage des coefficients 30 la formule de récurrence (8). Le schéma indiqué qui est identique pour tous les coefficients concerne l'un des coefficients complexe cq(n) du filtre transversal 29, qui à l'instant nT a été multiplié dans ce filtre par l'échantillon complexe D(n-q) correspondant aux données. Pour ce coefficient cq(n) ayant les valeurs 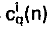 et 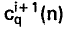 aux récurrences i et i + 1, la formule de récurrence (8) s'écrit: 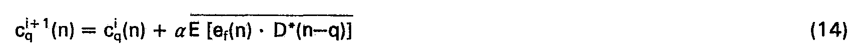 La mise en oeuvre de cette formule de récurrence suppose le calcul à chaque récurrence i de la quantité: 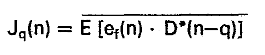 Le calcul de cette quantité Jq(n) peut être effectué de façon approchée en deux étapes. Dans une première étape on calcule une valeur approchée Iq(n) de la moyenne statistique lq(n): 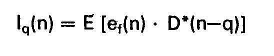 Cette valeur approchée l'_{q}(n) est obtenu en formant à la cadence 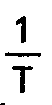 des échantillons du signal D(n), les produits e_{f}(n) · D*(n-q), puis en formant à la cadence 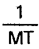 (M entier > 1) la somme de M de ces produits successifs. Ce calcul de l'_{q}(n) se traduit par la formule: 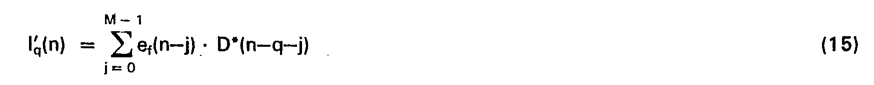 Dans une deuxième étape on cacule une valeur approchée J'_{q}(n) de Jq(n) en formant à la cadence 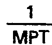 (P entier > 1), coïncidant avec la cadence choisi des récurrences, la somme de P valeurs succes- sives de l'_{q}(n). Ce calcul de Jq(n) se traduit par la formule:

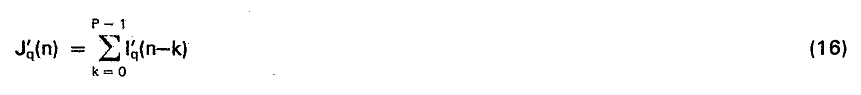

La mise en oeuvre de la formule de récurrence (14) suivant le procédé que l'on vient d'expliquer se traduit par le mode de réalisation montré à la figure 3 pour le circuit de réglage 30.

Ce circuit 30 comporte pour le réglage d'un coefficient cq(n) un circuit 41 qui forme à la cadence 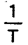 la valeur conjuguée D'(n-q) des échantillons complexes D(n-q) provenant du filtre 29. Le circuit multiplicateur 42 pour signaux complexes, forme à la cadence 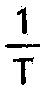 les produits successifs de D*(n-q) et du signal d'erreur e_{f}(n) fourni par le circuit de différence 31. Le circuit 44 forme à la cadence 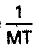 qui peut être déduite du générateur d'horloge 21, la somme de M de ces produits successifs et fournit donc à la cadence 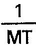 la quantité l'_{q}(n) conformément à la formule (15). Ce circuit 44 est par exempte un accumulateur connu en soi, dont le contenu est lu, puis remis à zéro à la cadence 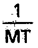 .Le circuit MT 45 forme à la cadence 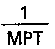 qui peut être déduite du générateur d'horloge 21 la somme de P quanti-MPT tés successives l'_{q}(n) et fournit donc à la cadence 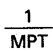 la quantité J'_{q}(n) conformément à la formule (16). Le circuit multiplicateur 46 multiplie la quantité J'_{q}(n) par le coefficient a et fournit à la cadence 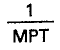 une valeur approchée du terme de modification du coefficient 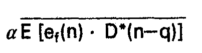 intervenant dans la formule de récurrence (14). Au moyen du circuit additionneur 47, cette valeur approchée de modification aJq(n) est ajoutée à chaque récurrence i au coefficient de valeur vⁱ_{q}(n) apparaissant à la sortie du circuit de retard 48 produisant un retard MPT, pour former le coefficient cⁱ⁺¹_{q} (n) à utiliser à la récurrence i + 1.

Comme on l'a indiqué plus haut, on demande au coefficient de pondération a qui intervient dans la grandeur de la modification des coefficients à chaque récurrence, d'être inférieur à 1. Avec le mode de réalisation du circuit de réglage des coefficients décrit à la figuré 3, on peut prendre un coefficient de pondération a relativement voisin de 1, ce qui procure à chaque récurrence des valeurs relativement grandes de modification des coefficients.

Dans un mode de réalisation plus simple du circuit de réglage 30, on peut éviter de calculer réellement une moyenne statistique dans le circuit 43 et une moyenne temporelle dans le circuit 44 en mettant en oeuvre au lieu de la formule (13) la formule de récurrence suivante: 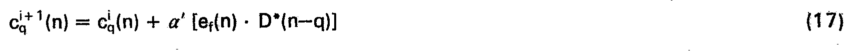 Dans cette formule (17) le coefficient de pondération a' est très petit par rapport à 1, tandis que la cadence des récurrences est la cadence 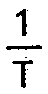 des échantillons du signal D(n). Pour mettre en oeuvre cette formule de récurrence, il suffit simplement de relier directement la sortie du circuit multiplicateur 42 à l'entrée du circuit multiplicateur 46 auquel est appliqué un coefficient a'très petit par rapport à 1 En reliant la sortie du circuit multiplicateur 46 à une entrée du circuit additionneur 47, associé à un circuit de retard 48 produisant un retard T, on obtient à la sortie de ce circuit 48, un coefficient cq(n) modifié à la cadence 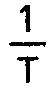 . Avec ce mode de réalisation du circuit de réglage des coefficients, la modification des coefficients est effectuée par incréments très faibles, en rapport avec la vateur de α et la simplicité est obtenu au prix d'un temps de convergence plus long qu'avec le mode de réalisation de la figure 3.

Dans une deuxième variante du dispositif d'annulation d'écho de la figure 2 que l'on va maintenant décrire, le critère utilisé pour le réglage des coefficients est la minimisation de la quantité r'(n)telle que: 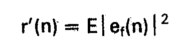 Cette quantité r'(n) diffère de la quantité r(n) à minimiser dans la première variante, pa'r la suppression de la moyenne temporelle.

En utilisant l'algorithme du gradient, le réglage des coefficients c̅ (n) du filtre transversal 29 doit être effectué selon une formule de récurrence comparable à la formule (5) et ayant la former.

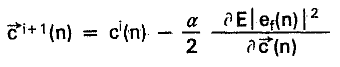

D'après les calculs donnés plus haut, on voit aisément que la formule de récurrence à mettre pratiquement en oeuvre est: 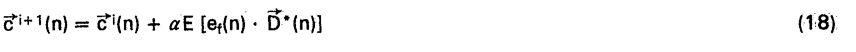 Cette dernière formule comparable à la formule (8) correspondant à la première variante. Il est clair que la formule de récurrence ( 18) est plus simple à mettre en oeuvre que la formule (8), puisqu'elle ne nécessite pas le calcul à chaque récurrence d'une moyenne temporelle:

On va maintenant montrer que dans la deuxième variante utilisant la formule de récurrence (18) pour le réglage des coefficients c̅(n), on obtient à la sortie du circuit de différence 31 un signal dans lequel la composante linéaire du signal d'écho est supprimée; à la sortie de ce circuit de différence on obtient un signal à phase variable qui, au contraire de la première variable est différent de la composante à phase variable du signal d'écho composite. De toutes façons l'annuleur d'écho à phase variable 28 est capable d'annuler le signal à phase variable fourni par l'annuleur d'écho linéaire 27.

Pour faire cette démonstration on part de la formule (11) qui donne une expression de la quantité 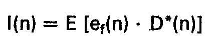 qui est utilisée dans la formule de récurrence (18). On montre alors aisément que la formule de récurrence (18) peut s'écrire: 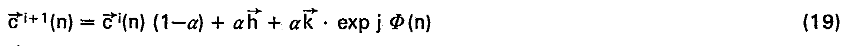 Cette formule est à comparer à la formule (13) de la première variante dans laquelle le terme α k̅exp j Φ (n) est nul du fait qu'intervient une moyenne temporelle dans la formule de récurrence (8) de cette première variante.

Pour la suite de la démonstration on décompose le vecteur des coefficients c̅(n) en deux vecteurs u̅(n) et v̅(n) tels que: 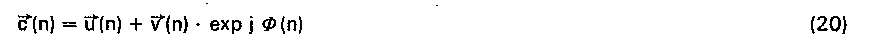 et on suppose que 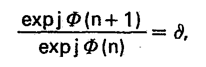 ∂ étant une constante, ce qui est le cas pour la phase variable d'un signal d'écho produite par une dérive de fréquence de la porteuse. En effet dans ce cas on a 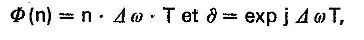 Δ ω étant la variation constante de la pulsation ω de la porteuse pendant chaque intervalle de temps T.

En tenant compte de la formule de décomposition (20), on montre aisément que l'on peut substituer à la formule de récurrence (19) les deux formules de récurrence:

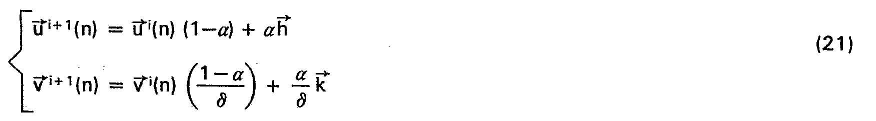

Compte tenu de la forme classique de ces deux formules de récurrence, on peut montrer que pour i tendant vers l'infini, les deux vecteurs de décomposition 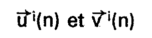 peuvent s'écrire:

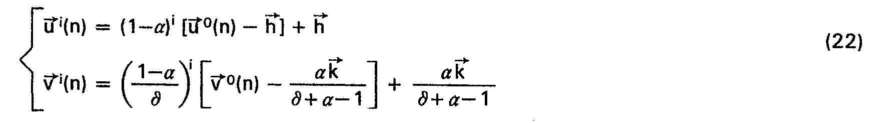

Si d'une part le coefficient a est choisi tel que 0 < a < 1 et si d'autre part on a |-α < |∂|, ce qui est vérifié dans le cas d'une dérive de fréquence, puisque |∂| =|exp j Δ ωT| = 1, les deux formules (22) deviennent pour i tendant vers l'infini:

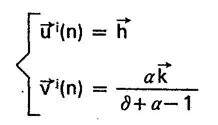

Le report de ces deux valeurs dans la formule (20) donne la valeur c̅ⁱ(n) des coefficients pour i tendant vers l'infini:

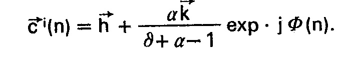

En reportant cette valeur c'(n) des coefficients, dans la formule (6) donnant le signal d'erreur e_{f}(n) à la sortie du circuit de différence 31, on obtient:

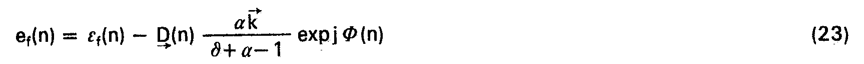

On a ainsi montré qu'en utilisant la formule de récurrence (17), le signal d'erreur e_{f}(n) ne contient plus, après un nombre suffisant de récurrences, la composante linéaire εₗ(n) du signal d'écho composite; ce signal d'erreur contient la composante à phase variable ε_{f}(n) du signal d'écho composite, combinée à un signal à phase variable représenté par le deuxième terme de la formule (23). Le signal d'erreur e_{f}(n) peut se mettre sous la forme: 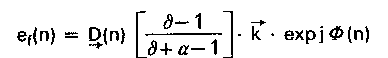 L'annuleur d'écho à phase variable 28 est capable d'annuler complètement un tel signal e_{f}(n) à phase variable Φ(n).

La mise en oeuvre de la formule de récurrence (18), dans le circuit de réglage 30 des coefficients peut être effectuée conformément au schéma de la figure 4 que l'on va décrire en comparaison avec celui de la figure 3. Les mêmes éléments sont désignés par les mêmes références sur ces deux figures.

La formule de récurrence mise en oeuvre sur le schéma de la figure 4 pour un coefficient cq(n) est:

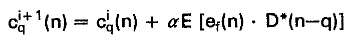

Cette formule est à comparer à la formule (14) mise en oeuvre sur le schéma de la figure 3. Sur la figure 4, le circuit 44 forme comme sur la figure 3, à la cadence 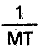 la valeur approchée l'_{q}(n) du terme 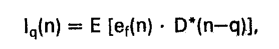 en effectuant les calculs donnés à la formule (15). La sortie du circuit 44 est appliquée directement au circuit multiplicateur 46 qui forme le produit α l'_{q}(n) qui est le terme de modification du coefficient. Au moyen du circuit additionneur 47, ceterme de modification est ajouté à chaque récurrence i au coefficient cq(n) apparaissant à la sortie du circuit de retard 48, pour former le coeffïcient 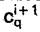 (n) à utiliser à la récurrence i + 1. Dans le cas présent, la cadence des récurrences est 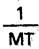 et le retard produit par le circuit 48 est MT.

De la même manière qu'on l'a expliqué à propos du circuit de la figure 3, on pourraît supprimer le circuit de calcul 44, en utilisant un coefficient α' très petit par rapport à 1, au prix d'une augmentation du temps de convergence des coefficients. Cette possibilité de simplifier le circuit de réglage 30 des figures 3 et 4, en utilisant un coefficient a'très petit par rapport à 1, peut être utilisée aussi dans d'autres variantes décrites par la suite; il n'en sera plus fait mention.

Dans les deux variantes du dispositif d'annulation d'écho à structure série de la figure 2, on applique à ce dispositif la version complexe c(n) du signal d'écho composite apparaissant sur l'aceès réception de la jonction hybride 6 du modem; tous les calculs effectués portent sur des nombres complexes et en particulier on utilise, pour le réglage des dispositifs variables des deux annuleucs d'écho 27 et 28 des signaux d'erreur complexes.

On va maintenant décrire deux autres variantes du dispositif d'annulation d'écho à structure série, selon lesquelles on applique directement à ce dispositif le signal d'écho composite apparaissant sur l'accès réception de la jonction hybride 6, ce signal d'écho étant réel. Dans ces deux nouvelles variantes l'annuleur d'écho linéaire 27 travaille sur un signal d'erreur réel tandis que l'annuleur d'écho à phase variable 28 peut également travailler sur un signal d'erreur réel. On évite alors le circuit déphaseur de 90°, 33 tandis que certains calculs sont simplifiés dans les deux annuleurs d'écho, notamment dans leurs filtres transversaux.

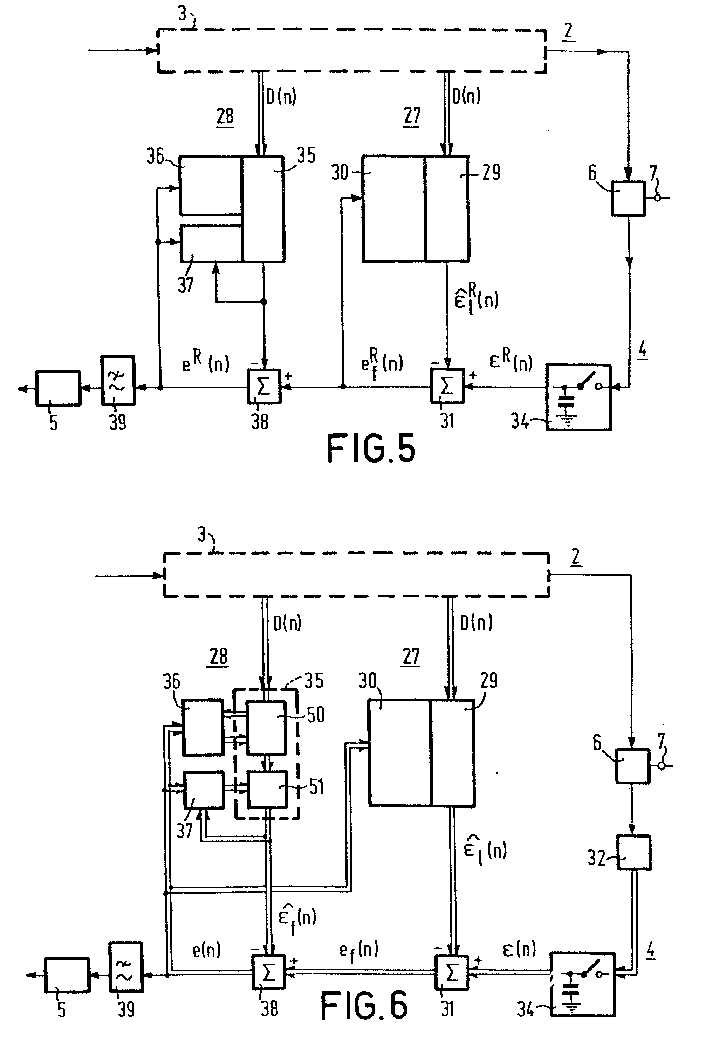

La structure générale du dispositif d'annulation d'écho correspondant à ces deux autres variantes est représentée sur le schéma de la figure 5. On décrit ce schéma par comparaison avec celui de la figure 2, les mêmes éléments étant désignés par les mêmes références sur les deux schémas. On utilise aussi les mêmes notations pour les signaux, avec toutefois l'indice R quand il s'agit de signaux réels pouvant être considérés comme la partie réelle de signaux complexes.

On voit sur la figure 5 que le signal d'écho composite à annuler apparaissant sur l'accès réception de la jonction hybride 6 est échantillonné directement par le circuit 34, puis appliqué à l'entrée (+) du circuit de différence 31. Le signal appliqué à cette entrée est réel et appelé e^{R}(n). Il est la somme d'une composante linéaire 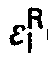 (n) et d'une composante à phase variable ε^{R}_{f}(n). L'annuleur d'écho linéaire 27 comporte le filtre transversal 29 qui reçoit du modulateur 3 le signal de données complexe D(n), qui est muni d'un circuit de réglage 30 pour ses coefficients complexes c̅(n) et qui est agencé pour ne fournir que la partie réelle des nombres calculés selon la formule (1) ci-dessus. Ces nombres constituent le signal réel 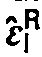 (n) qui est appliqué à l'autre entrée (-) du circuit de différence 31. Ce dernier fournit le signal réel de différence eR(n) tel que:

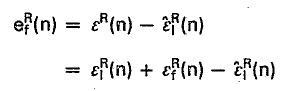

Ce signal ef(n) est utilisé dans le circuit de réglage 30 pour régler les coefficients c̅(n) par récurrences successives de sorte qu'après convergence de ces coefficients le signal réel c̅^{R}(n) soit égal à la composante linéaire ε_{Rl}(n). On décrira plus loin les formules de récurrence à mettre en oeuvre dans le circuit 30 dans les deux nouvelles variantes. Dans ces deux variantes, il ne subsiste plus dans le signal réel de différence eR(n) que la partie réelle du signal à phase variable qui est appliqué à l'annuleur d'écho à phase variable 28. Ce dernier est constitué comme sur la figure 2, mais est conçu pour annuler le signal réel à phase variable qui est appliqué à son circuit de différence 38, à partir du signal réel fourni par son dispositif de traitement réglable 35 et à partir du signal d'erreur réel o̅^{R}(n) fourni par son circuit de différence 38. Une description d'un annuleur d'écho à phase variable de ce genre est donnée par exemple dans la demande de brevet déposée au nom de la demanderesse le 26 mars 1980 sous le n° 8 006 748.

Les méthodes de calcul permettant d'aboutir aux formules de récurrence à utiliser dans le dispositif de la figure 5 pour le réglage des coefficients c̅(n) de l'annuleur d'écho linéaire 27, sont similaires à celles déjà expliquées pour le dispositif de la figure 2 et ne sont pas réexpliquées en détail.

Dans une première variante le critère utilisé est la minimisation de la quantité 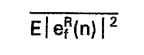 tandis que dans une deuxième variante le critère est la minimisation de la quantité E|e^{R}_{f}(n)|2.

Avec l'algorithme du gradient, la formule de récurrence pour la première variante est sous forme générale: 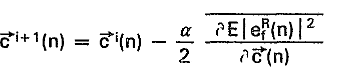 On peut montrer que: 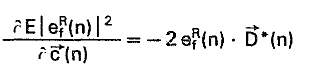 Par conséquent la formule de récurrence à mettre en oeuvre finalement dans le circuit 30 pour la première variante s'écrit: 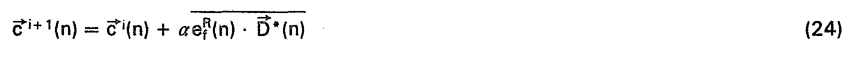 Sous la même forme, la formule de récurrence pour la deuxième variante s'écrit:

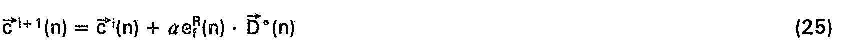

Avec la même méthode que celle déjà expliquée pour la formule de récurrence (8) on peut montrer que dans la variante utilisant la formule de récurrence (24), les coefficients c̅(n) du filtre 30 convergent vers des valeurs telles que la composante linéaire ε^{R}l(n) est annulée dans le signal de différence er(n) et que ne subsiste plus dans ce signal de différence que la composante à phase variable ε^{R}_{f}(n) présente dans le signal d'écho composite. L'annuleur d'écho 28 est capable d'annuler cette composante.

On peut montrer également que dans la variante utilisant la formule de récurrence (25), les coefficients c̅(n) du filtre 30 convergent vers des valeurs annulant la composante linéaire ε^{R}ₗ(n) dans le signal de différence eR(n); dans ce signal de différence il ne subsiste que la partie réelle d'un signal à phase variable ayant la forme de la partie réelle du signal donné par la formule (23). L'annuleur d'écho 28 est capable également d'annuler un tel signal réel à phase variable.

Des circuits de réglage 30 mettant en oeuvre les formules de récurrence (24) ou (25) peuvent être réalisés respectivement suivant les schémas indiqués aux figures 3 et 4, à condition d'appliquer au circuit multiplicateur 42 le signal d'erreur e^{R}_{f}(n) au lieu du signal d'erreur complexe e_{f}(n).

Sur la figure 6, est représenté le schéma d'un mode de réalisation du dispositif d'annulation d'écho de l'invention ayant une structure dite parallèle. Sur ce schéma, on trouve les mêmes éléments munis des mêmes références que sur le schéma du dispositif de la figure 2 à structure série. Sur les deux schémas, le dispositif d'annulation d'écho utilise la version complexe du signal d'écho composite apparaissant sur l'accès réception de la jonction hybride 6. Tous les éléments sont connectés de la même manière sauf le circuit de réglage 30 qui reçoit le signal fourni par le circuit de différence 38 de l'annuleur d'écho à phase variable 28 pour régler les coefficients de l'annuleur d'écho linéaire 27. Dans cette structure, les circuits de réglage des deux annuleurs d'écho 27 et 28 sont donc commandés par le même signal de différence.

Avec cette structure parallèle on peut obtenir, moyennant un réglage convenable par récurrence des coefficients de l'annuleur d'écho linéaire 27, que la composante linéaire du signal d'écho composite soit annulée dans le signal fourni par le circuit de différence 31 de sorte que la composante à phase variable qui y subsiste peut être annulée par l'annuleur d'écho 28.

Pour la suite des explications, on utilise toutes les notations et tous les signaux définis plus haut. Mais il est nécessaire de plus de préciser le type d'annuleur d'écho à phase variable utilisé et de définir quelques grandeurs et signaux le concernant. Sur la figure 6, on a supposé que l'artnuleur d'écho à phase variable 28 est réalise suivant une variante décrite dans la demande de brevet europeen EP-AI-0 036 696, variante selon laquelle le dispositif de traitement variable 35 se compose d'un filtre transversal 50 suivi d'un circuit déphaseur 51 dont la sortie est connectée à une entrée du circuit de différence 38. Le filtre transversal 50 reçoit le signal de données D(n) et ses coefficients dq(n) sont réglés dans le circuit de réglage 36. Avec la notation vectorielle, le signal de sortie du filtre transversal 50 peut s'écrire D(n) . d̅(n). Le circuit déphaseur 51 modifie la phase du signal fourni par le filtré transversal 50, de la phase simulée Φ(n) formée dans le circuit de réglage 37 de façon à être égale à la phase du signal e_{f}(n) appliqué au circuit de différence 38. Le signal Cf(n) fourni par le circuit déphaseur 51 au circuit de différence 38 s'écrit:

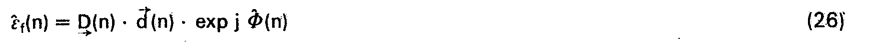

Avec les notations utilisées, le signal de différence e(n) utilisé pour le réglage des deux annulers d'écho 27 et 28 s'écrit:

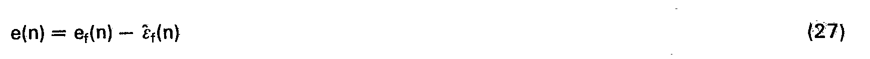

On va expliquer maintenant comment peut être effectué le réglage des coefficients de l'annuleur d'écho linéaire 27 pour qu'à la sortie de son circuit de différence 31 ne subsiste plus de composante linéaire du signal d'écho composite.

Dans une première variante de la structure parallèle de la figure 6, le critère utilisé est la minimisation de la quantité E| e(n) |², de sorte que la formule de récurrence à utiliser dans le circuit de réglage 30 des coefficients c̅(n) s'écrit sous forme générale: 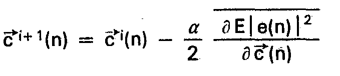 Compte tenu des formules (6) et (27), e(n) peut s'écrire: 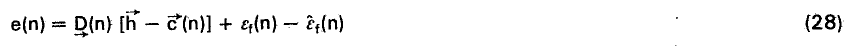 Par la même méthode que l'on a utilisée plus haut, on peut montrer que:

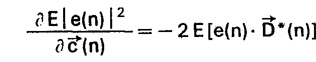

La formule de récurrence déduite du critère indiqué ci-dessus s'écrit donc finalement:

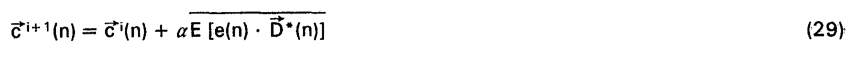

On va montrer maintenant que l'utilisation de cette formule d'e récurrence permet d'obtenir l'annulation de la composante linéaire du signal d'écho composite, par l'annuleur d'écho 27. On appelle K(n) la quantité: 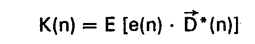 En remplaçant e(n) dans cette formule, par son expression de la formule (28) et en prenant en compte que la quantité 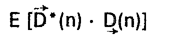 est égale à la matrice identité, on peut montrer que: 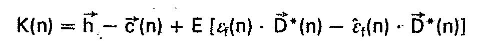 En remplaçant ε̅_{f}(n) et ε̅_{f}(n) dans cetteformule, par leurs expressions données aux formules (3) et (25) et en prenant encore en compte que la quantité 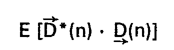 est égale à la matrice identité, on peut montrer que:

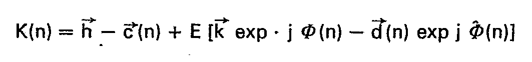

Mais selon la formule (29) la quantité L(n) à calculer à chaque récurrence pour modifier les coefficients c̅ⁱ(n) est: 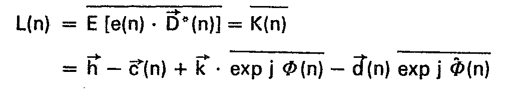 Comme on suppose que l'on se place dans le cas où la moyenne temporelle de la phase variable Φ(n) est nulle et comme la phase simulée Φ(n) est asservie sur Φ(n), on a Φ(n) = 0, Φ(n) = ₀ et l'on obtientfinale- ment:

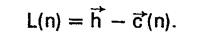

En remplaçant dans la formule de récurrence (29) la quantité 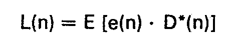 par sa valeur h̅ - c̅ⁱ(n) à la récurrence i, on peut montrer par une méthode déjà utilisée, que les coefficients c'(n) du filtre transversal 29 tendent vers, h̅, quand i tend vers l'infini; ceci démontre d'après la formule (6) que le signal de différence e_{f}(n) fourni par l'annuleur d'écho 27 ne contient plus la composante linéaire εₗ(n) et est égal à la composante à phase variable ε_{f}(n) du signal d'écho composite.

Dans une deuxième variante de la structure parallèle de la figure 6, le critère utilisé est la minimisation de la quantité E 1 e(n) 12. D'après les explications que l'on vient de donner pour la première variante, il est clair que la formule de récurrence à mettre en oeuvre dans l'annuleur d'écho 27 pour cette deuxième variante est:

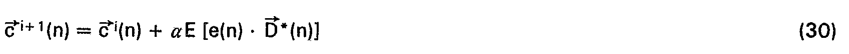

On a pu vérifier qu'en mettant en oeuvre cette formule de récurrence (30) les coefficients c̅(n) de l'annuleur d'écho 27 convergent vers des valeurs produisant dans le signal de différence e_{f}(n) une annulation de la composante linéaire eₗ(n) du signal d'écho composite et que ne subsiste plus dans ce signal de différence qu'un signal à phase variable Φ(n) que l'annuleur d'écho 28 peut annuler.

Des circuits de réglage 30 mettant en oeuvre les formules de récurrence (29) ou (30) peuvent être réalisés respectivement suivant les schémas indiqués aux figures 3 ou 4, à condition d'appliquer au circuit multiplicateur 42, le signal d'erreur e(n) au lieu du signal d'erreur e_{f}(n).

On peut également appliquer à la structure parallèle la mesure préconisée pour la structure série et illustrée par la figure 5, cette mesure consistant à utiliser directement dans le dispositif d'annulation d'écho le signal réel provenant de la jonction hybride 6 et appelé ε^{R}(n) après son échantillonnage dans le circuit d'échantillonnage 34. Le schéma correspondant peut être aisément construit à partir de la figure 6, en y supprimant le circuit 32 de formation d'un signal complexe; les circuits de différence 31 et 38 ne reçoivent et ne fournissent que des signaux réels; le circuit de réglage 30 de l'annuleur d'écho linéaire 27 et les circuits de réglage 36 et 37 de l'annuleurd'écho à phase variable 28 sont commandés par le signal d'erreur réel e^{R}(n) fourni par le circuit de différence 30. Les formules de récurrence qui peuvent être utilisées dans le circuit de réglage 30 des coefficients c̅(n) sont les formules (29) ou (30) dans lesquelles le signal d'erreur complexe e(n) est remplacé par le signal d'erreur réel e^{R}(n). Le circuit de réglage 30 peut être réalisé suivant les schémas des figures 3 ou 4 pour mettre en oeuvre les formules (29) ou (30) en appliquant au circuit multiplicateur 42 le signal réel e^{R}(n).

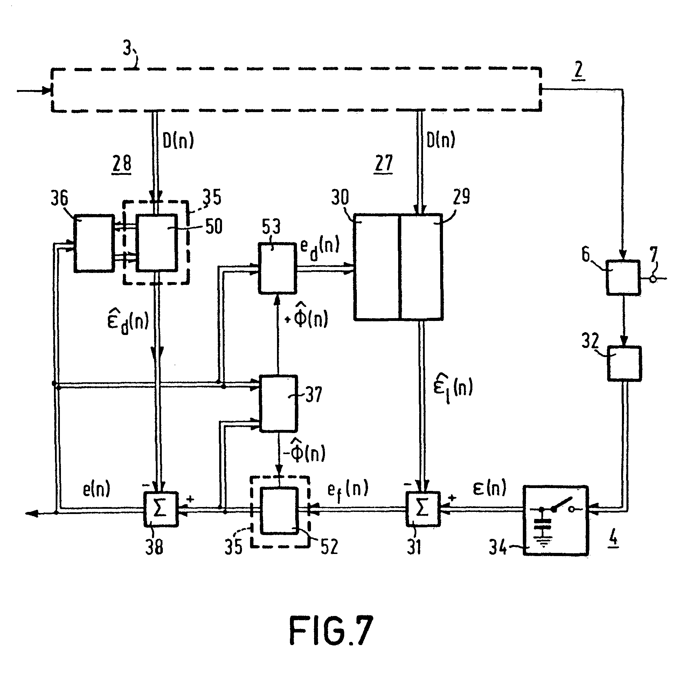

Sur la figure 7 est représentée une autre variante du dispositif de l'invention ayant également une structure parallèle. La différence avec la figure 6 est due à une autre configuration du dispositif de traitement réglable 35 dans l'annuleur d'écho à phase variable 28. Dans cette configuration qui correspond à une variante de l'annuleur d'écho à phase variable décrite dans la demande de brevet français n° 8 006 748, le dispositif 35 comporte également le filtre transversal 50 recevant le signal de données D(n), mais au lieu d'utiliser comme sur la figure 6 un circuit déphaseur 51 qui modifie de + Φ(n) la phase du signal fourni par 1e filtre 50 avant d'appliquer ce signal à l'entrée (-) du circuit de différence 38, on utilise sur la figure 7 un circuit déphaseur 52 qui modifie de -Φ(n) la phase du signal e_{f}(n) fourni par l'annuleur d'écho 27, avant d'appliquer ce signal à l'entrée (+) du circuit de différence 38. On rappelle que Φ(n) est une phase engendrée dans le circuit de réglage de phase 37, de façon que cette phase Φ(n) soit égale à la phase variable Φ(n) du signal e_{f}(n).

Dans ce cas, en appelant ε̅_{d}(n) le signal fourni par le filtre transversal 50, on peut montrer aisément que le signal de différence e(n) utilisé pour le réglage des deux annuleurs d'écho 27 et 28 a l'expression suivante, différente de la formule (28):

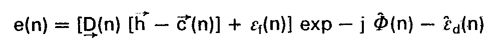

Par la méthode déjà expliquée on peut montrer qu'avec cette expression de e(n) on a:

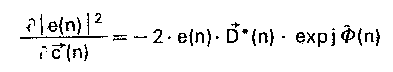

On en déduit que si le critère utilisé dans l'annuleur d'écho 27 pour régler les coefficients c̅(n), est la minimisation de la quantité E|e(n) |², la formule de récurrence à utiliser pour ce réglage est: 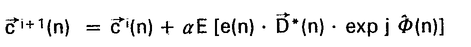 ou 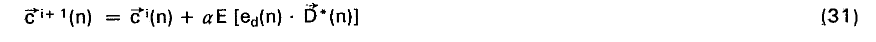 avec

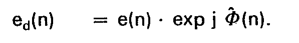

Pour mettre en oeuvre la formule de récurrence (31) dans le circuit de réglage 30, on peut, comme le montre la figure 7, former le signal e_{d}(n) au moyen du circuit déphaseur 53 qui modifie le signal d'erreur e(n) de la phase + Φ(n) fourni par le circuit de réglage 37. Le circuit de réglage 30 utilise alors ce signal e_{d}(n) pour modifier les coefficients c(n). Il est clair d'après ce qui précède qu'il peut être construit comme l'indique le schéma de la figure 4, en appliquant au circuit multiplicateur 42 le signal e_{d}(n).

On peut également dans la structure parallèle illustrée par la figure 7, utiliser pour le réglage des deux annuleurs d'écho 27 et 28 un critère consistant à minimiser la quantité E|e^{R}(n) 12, e^{A}(n) étant la partie réelle du signal de différence apparaissant à la sortie du circuit de différence 38. En ce qui concerne l'annuleur d'écho à phase variable 28, des modes de réalisation correspondant à ce critère ont été décrits dans la demande de brevet européen EP-AI-0 036 696. On a toujours besoin dans ce cas de former dans le circuit 32 la version complexe du signal apparaissant à l'accès réception de la jonction hybride 6 et d'utiliser un circuit déphaseur 52 qui modifie de -Φ(n) la phase du signal de différence complexe fourni par le circuit de différence 31. Mais dans l'annuleur d'écho à phase variable 28, le circuit de différence 38 forme un signal d'erreur e^{R}(n) comme la différence entre la partie réelle du signal fourni par le circuit déphaseur 52 et la partie réelle du signal fourni par le filtre transversal 50. Le circuit de réglage 36 des coefficients de ce filtre est commandé par le signal d'erreur e^{R}(n) tandis que le circuit de réglage 37 de la phase Φ(n) est commandé par ledit signal d'erreur e^{R}(n) et par la partie imaginaire du signal fourni par le circuit déphaseur 52. En ce qui concerne l'annuleur d'écho linéaire 27, la formule de récurrence à appliquer est: 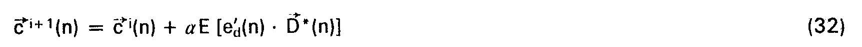 avec 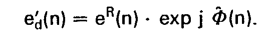 Pour l'application de cette formule de récurrence (32), il suffit d'appliquer au circuit déphaseur 53, le signal réel e^{R}(n) fourni par le circuit de différence 38 pour obtenir à la sortie de ce circuit déphaseur 53 le signal complexe ed(n), le circuit 30 de réglage des coefficients pouvant alors répondre au schéma de la figure 4 en appliquant au circuit multiplicateur 42 le signal ed(n).

Les schémas des deux structures série et parallèle du dispositif de l'invention que l'on a décrites dans le cas de deux composantes du signal d'écho composite peuvent être aisément construits dans le cas où ce signal d'écho composite comporte plus de deux composantes.

Sur les schémas précédents du dispositif d'annulation d'écho de l'invention, on a complètement dissocié le filtre transversal 29 de l'annuleur d'écho linéaire 27 et le filtre transversal 50 de l'annuleur d'écho à phase variable 28. Mais il est possible dans la pratique de simplifier la réalisation de ces deux filtres transversaux en se servant d'éléments communs, en tenant compte des caractéristiques des signaux d'écho à annuler et enfin en utilisant judicieusement une propriété de l'annuleur à phase variable qui est de pouvoir également annuler un écho à phase fixe, c'est-à-dire un écho linéaire.

Comme on l'a déjà indiqué, les calculs à effectuer dans le filtre transversal 29 de l'annuleur d'écho linéaire 27 pour obtenir le signal ε̂ₗ(n) de sortie du filtre sont de la forme: 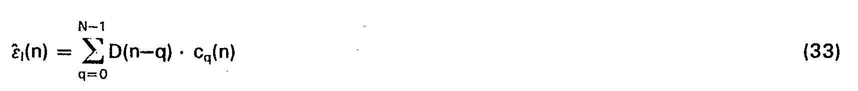 Ces calculs peuvent être mis en oeuvre au moyen d'une mémoire, par exemple une ligne à retard, produisant un retard total NT et fournissant sur N prises N échantillons D(n-q) du signal D(n) avec un retard T entre échantillons successifs et au moyen de N circuits multiplicateurs formant les produits de ces échantillons et des coefficients cq(n) du filtre, ces produits étant additionnés à la cadence ―.

Les calculs à effectuer dans le filtre transversal 50 de l'annuleur d'écho à phase variable 28 pour obte- - nir le signal Ë_{d}(n) sortant de ce filtre ont une forme semblable à (33), soit:

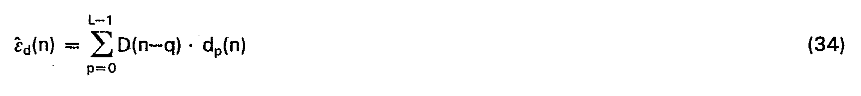

Ces calculs peuvent être effectués avec une ligne à retard produisant un retard total LT, fournissant sur L prises L échantillons retardés D(n-p) et L circuits multiplicateurs formant les produits de ces échantillons et des coefficients dp(n), ces produits étant additionnés à la cadence 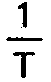 .

Pour réaliser les deux filtres transversaux 29 et 50, on peut utiliser évidemment la même ligne à retard produisant le retard maximal LT nécessaire pour annuler l'écho composite et connecter aux L prises de cette ligne le même nombre de circuits multiplicateurs par les coefficients du filtre transversal 29 et de circuits multiplicateurs par les coefficients du filtre transversal 50.

Mais il est possible de réduire encore notablement le nombre de ces circuits multiplicateurs qui sont très coûteux, en tenant compte des caractéristiques du signal d'écho composite à annuler, caractéristiques que l'on explique au moyen de la figure 1. D'après cette figure déjà décrite, les éléments susceptibles d'engendrer dans le modem 1 un signal d'écho sont:
la jonction hybride 6 qui peut engendrer un écho linéaire dit écho linéaire local,
- la ligne 12 qui peut engendrer un écho linéaire,
la section à courants porteurs comprise entre les jonctions hybrides 10 et 11 qui peut engendrer un écho à phase variable,
- la ligne 13 qui peut engendrer un écho linéaire.

On peut remarquer que la section à courants porteurs qui peut engendrer un écho à phase variable peut se trouver à n'importe quelle distance du modem 1 et en particulier la ligne 12 la plus proche peut avoir une longuer nulle. D'autre part si la section à courants porteurs produit une dérive de fréquence et si un écho linéaire se produit dans la ligne 13 la plus éloignée, cet écho reviendra dans le modem 1 affecté d'une phase variable. Enfin la section à courants porteurs peut ne pas produire de dérive de fréquence si les fréquences f₁, f₂, fl, f2 répondent à la condition 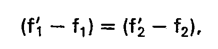 de sorte que l'écho retournant vers le modem 1 peut être exclusivement de type linéaire, ce qui est évidemment aussi le cas si l'écho ne rencontre pas de section à courants porteurs.

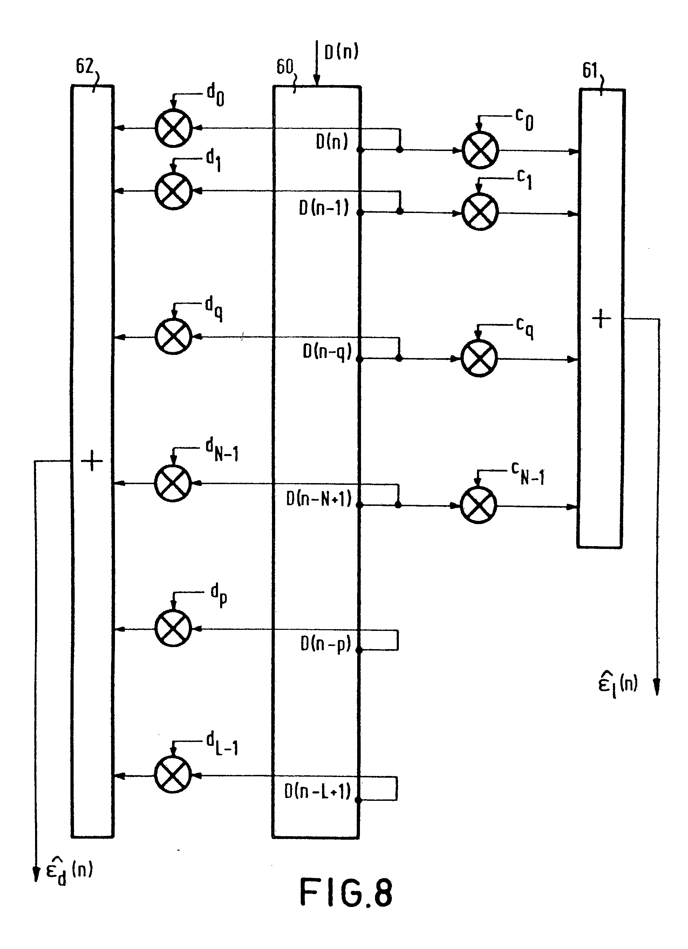

Le dispositif d'annulation d'écho à installer dans le modem 1 doit donc pouvoir annuler un écho linéaire local produit par la jonction hybride 6, auquel peut se superposer un écho dit lointain produit dans la liaison entre les deux modems 1 et 8, cet écho lointain pouvant être soit entièrement de type linéaire, soit entièrement de type à phase variable, soit une combinaison des deux types. On appelle t, la durée pendant laquelle peut se produire l'écho linéaire local produit par la jonction hybride 6 et éventuellement une portion fixe de la ligne 12 la plus proche et on appelle t_{d} la durée maximale pendant laquelle peut se produire l'écho lointain. On a évidemment t_{d} >t,. La figure 8 montre un schéma combinant les deux filtres transversaux 29 et 50 des deux annuleurs d'écho 27 et 28, de façon à réduire de façon optimale le nombre de circuits multiplicateurs à utiliser dans ces filtres.

Le schéma de la figure 8 comporte une ligne à retard 60 recevant le signal de données D(n), produisant un retard total LT = td et munie de L prises sur lesquelles apparaissant des échantillons retardés successivement entre eux de T du signal de données D(n). Une première section de cette ligne à retard comporte N prises (N < L) sur lesquelles apparaissant N échantillons D(n-q) du signal D(n), q allant de 0 à N-1. Cette première section produit en tout un retard NT = td. Ces N prises sont connectées à N circuits multiplicateurs formant les produits des N échantillons D(n-q) et de N coefficients cq. Les sorties de ces circuits multiplicateurs sont connectées au circuit sommateur 61, qui forme des échantillons du signal t,(n) conformément à la formule (33). Cette partie du schéma que l'on vient de décrire constitue le filtre transversal 29 de l'annuleur d'écho linéaire 27.

Sur l'ensemble des L prises de la ligne à retard, comprenant les N prises de la première section apparaissent L échantillons D(n-p) du signal D(n), p allant de 0 à L-1. Ces L prises sont connectées à L circuits multiplicateurs formant les produits des L échantillons D(n-p) et de L coefficients dp. Les sorties de ces circuits multiplicateurs sont connectées au circuit sommateur 62, qui forme des échantillons du signal ê_{d}(n) conformément à la formule (34). Cette partie du schéma que l'on vient de décrire constitue le filtre transversal 50 de l'annuleur d'écho à phase variable 28.

La partie du dispositif de la figure 8 située à droite de la ligne à retard 60 et fournissant le signal ε̂(n), permet l'annulation de l'écho linéaire local. La partie à gauche de la ligne à retard 60 et fournissant le signal ê_{d}(n) permet l'annulation de l'echo lointain à phase variable, quand cet écho à phase variable se produit. Mais, elle permet également l'annulation d'un écho linéaire lointain, quand l'echo lointain n'est affecté d'aucune dérive de fréquence.

On a décrit ci-dessus le dispositif d'annulation d'écho de l'invention dans son application à la transmission de données. Mais il est clair qu'il peut être utilisé aussi dans un système de transmission de signaux téléphoniques où peut se poser le même problème d'annulation d'un signal d'écho composite.

## Revendications

1. Dispositif d'annulation d'écho traitant le signal (D(n)) apparaissant dans une première voie unidirectionnelle (2) pour annuler un signal d'écho composite (e(n)) se produisant dans une deuxième voie unidirectionnelle (4) en réponse audit signal dans la première voie, ce signal d'echo composite étant formé de plusieurs composantes à caractéristiques différentes, ce dispositif étant formé d'un ensemble d'annuleurs d'écho (27, 28) dont le nombre correspond au nombre desdites composantes et qui sont connectés entre la première voie (2) et l'entrée soustractive de circuits de différence (31), (38) connectés en cascade dans la deuxième voie (4), chaque annuleur d'écho (27, 28) comportant un filtre transversal (29, 50) à coefficients réglables commandé par un circuit de réglage des coefficients (30, 36) alors qu'au moins un annuleur d'écho (28) comporte un circuit de compensation d'une caractéristique d'une composante de signal d'écho, caractérisé en ce que ledit circuit de compensation (51 ou 52) muni d'un circuit de réglage (37) est inséré soit sur l'entrée additive du circuit de différence (38; fig 7) correspondant, tous les circuits de réglage (30, 36, 37) de l'ensemble des annuleurs d'écho (27, 28) étant commandés simultanément et, dans chaque annuleur d'écho (27 ou 28), les circuits de réglage (30,36, 37) des coefficients de filtre et dudit circuit de compensation sont commandés automatiquement de façon à rendre minimale une fonction prédéterminée du signal d'écho résiduel apparaissant à la sortie du montage en cascade desdits circuits de différence (31 et 38), soit sur l'entrée soustractive du circuit de différence (38) correspondant, tous les circuits de réglage (30, 36), (37) de l'ensemble des annuleurs d'écho (27, 28) étant commandés simultanément et, dans chaque annuleur d'écho (27 ou 28), les circuits de réglage (30, 36, 37) des coefficients de filtre et dudit circuit de compensation sont commandés automatiquement de façon à rendre minimale une fonction prédéterminée du signal d'écho résiduel, apparaissant à la sortie du circuit de différence (31 ou 38; figs 2 et 5) connecté audit annuleur d'écho (27 ou 28), ou à la sortie du montage en cascade desdits circuits de différence (31 et 38; fig 6).

2. Dispositif selon la revendication 1, destiné à annuler un signal d'écho composite formé d'une composante linéaire et d'une composante à phase variable, ce dispositif étant constitué d'un annuleur d'écho linéaire (27) dont le circuit de différence (31) a son entrée additive couplée à l'entrée de la deuxième voie unidirectionnelle (4) et d'un annuleur d'écho à phase variable (28) dont le circuit de différence (38) a son entrée additive couplée à la sortie du circuit de différence (31 ) de l'annuleur d'écho linéaire (27), l'annuleur d'écho à phase variable (35) comportant un circuit de compensation de phase (51 ) inséré sur l'entrée soustractive de son circuit de différence (38), caractérisé en ce que le circuit de réglage (30) des coefficients du filtre transversal (29) de l'annuleur d'écho linéaire (27) comporte, pour chaque coefficient Cq(n) à régler, des moyens de multiplication (42) pour former à la cadence 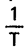 le produit du signal de différence contenant le signal d'écho résiduel et de la valeur conjuguée D^{*}(n-q) d'un échantillon D(n-q) du signal complexe de la première voie, qui est stocké dans le filtre transversal (29), des moyens de calcul (44) pour former à la cadence 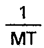 (M entier > 1 ) la moyenne statistique lq(n) du produit précédent, des moyens de multiplication (46) pour former le produit alq(n), a étant un coefficient inférieur à 1, des moyens enfin (47, 48) pour incrémenter de α l_{q}(n), à la cadence 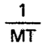 , ledit coefficient Cq(n).

3. Dispositif selon la revendication 2, caractérisé en ce que ladite moyenne statistique Iq(n) est calculée en formant à la cadence 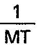 , la somme de M produits du signal de différence contenant le signal d'écho résiduel et de la valeur conjuguée D^{*}(n-q).

4. Dispositif selon la revendication 2, caractérisé en ce que le circuit de réglage (30) des coefficients du filtre transversal (29) de l'annuleur d'écho linéaire (27) comporte en outre, pour chaque coefficient cq(n) à régler, des moyens de calcul (45) pour former à la cadence 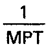 (P entier > 1 ) la moyenne temporelle Jq(n) de la moyenne statistique Iq(n), des moyens de multiplication (46) pour former le produit α. Jq(n), a étant un coefficient inférieur à 1, des moyens (47, 48) enfin pour incrémenter de α· Jq(n), à la cadence 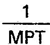 ledit coefficient cq(n).

5. Dispositif selon la revendication 4, caractérisé en ce que la moyenne statistique Iq(n) est calculée en formant à la cadence 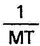 , la somme de M produits du signal de différence contenant le signal d'écho résiduel et de la valeur conjuguée D*(n-q) et la moyenne temporelle Jq(n) est calculée en formant à la cadence 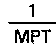 la somme de P valeurs de Iq(n).

6. Dispositif selon la revendication 1, destiné à annuler un signal d'écho composite formé d'une composante linéaire et d'une composante à phase variable, ce dispositif étant constitué d'un annuleur d'écho linéaire (27) dont le circuit de différence (31) a son entrée additive couplée à l'entrée de la deuxième voie unidirectionnelle (4) et d'un annuleurd'écho à phase variable (28) dont le circuit de différence (38) a son entrée additive couplée à la sortie du circuit de différence (31 ) de l'annuleur d'écho linéaire (27), l'annuleur d'écho à phase variable (28) comportant un circuit de compensation de phase de Φ(n) (51 ) inséré sur l'entrée soustractive de son circuit de différence (38), caractérisé en ce que le circuit de réglage (30) des coefficients du filtre transversal (29) de l'annuleur d'écho linéaire (27) comporte pour chaque coefficient çq(n) à régler, des moyens de multiplication (42) pour former à la cadence 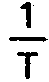 le produit du signal de différence contenant le signal d'écho résiduel et de la valeur conjuguée D^{*}(n-q) d'un échantillon D(n-q) stocké dans le filtre transversal (29), des moyens de multiplication (46) pour pondérer le produit précédent par un coefficient a' petit par rapport à 1, des moyens enfin (47, 48) pour incrémenter dudit produit pondéré, à la cadence 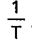 , ledit coefficient cq(n).

7. Dispositif selon la revendication 1 destiné à annuler un signal d'écho composite formé d'une composante linéaire et d'une composante à phase variable, ce dispositif étant constitué d'un annuleur d'écho linéaire (27) dont le circuit de différence (31) a son entrée additive couplée à l'entrée de la deuxième voie unidirectionnelle (4) et d'un annuleur d'écho à phase variable (28) dont le circuit de différence (38) a son entrée additive couplée à la sortie du circuit de différence (31) de l'annuleur d'écho linéaire (27), l'annuleur d'écho à phase variable (28) comportant un circuit de compensation de phase de-Φ̂(n) (52) inséré sur l'entrée additive de son circuit de différence (38), ϕ̂(n) étant une phase formée par le circuit de réglage (37) dudit circuit de compensation pour être égale à la phase de la composante à phase variable du signal d'écho composite, caractérisé en ce qu'il est prévu un circuit (53) déphasant de + Φ(n) le signal de différence apparaissant à la sortie du circuit de différence (38) de l'annuleur d'écho à phase variable (28) et en ce que le circuit de réglage (30) des coefficients du filtre transversal (29) de l'annuleur d'écho linéaire (27) comporte, pour chaque coefficient cq(n) à régler, des moyens de multiplication (42) pour former à la cadence 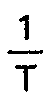 le produit dudit signal de différence déphasé de + Φ̂(n) et de la valeur conjuguée D^{*}(n-q) d'un échantillon D(n-q) stocké dans le filtre transversal (29), des moyens (44) pour former à la cadence 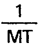 (M entier > 1 ) la moyenne statistique I_{q}(n) du produit précédent, des moyens de multiplication (46) pour former le produit α· Iq(n), a étant un coefficient inférieur à 1, des moyens enfin (47, 48) pour incrémenter de αl_{q}(n), à la cadence 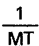 , ledit coefficient cq(n).

8. Dispositif selon la revendication 7, caractérisé en ce que ladite moyenne statistique Iq(n) est calculée en formant à la cadence 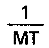 , la somme de M produits dudit signal de différence déphasé de +Φ̂(n) et de la valeur conjuguée D*(n-q).

9. Dispositif selon la revendication 1, destiné à annuler un signal d'écho composite formé d'une composante linéaire et d'une composante à phase variable, ce dispositif étant constitué d'un annuleur d'écho linéaire (27) dont le circuit de différence (31) a son entrée additive couplée à l'entrée de la deuxième voie unidirectionnelle (4) et d'un annuleur d'écho à phase variable (28) dont le circuit de différence (38) a son entrée additive couplée à la sortie du circuit de différence (31 ) de l'annuleur d'écho linéaire (27), l'annuleur d'écho à phase variable (28) comportant un circuit de compensation de phase de -Φ̂(n) (52) inséré sur l'entrée additive de son circuit de différence (38), caractérisé en ce qu'il comporte un circuit (53) déphasant de + Φ̂(n) le signal de différence apparaissant à la sortie du circuit de différence (38) de l'annuleur d'écho à phase variable (28) et en ce que le circuit de réglage (30) des coefficients du filtre transversal (29) de l'annuleur d'écho linéaire (27) comporte, pour chaque coefficient cq(n) à régler, des moyens de calcul (42) pour former à la cadence 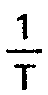 le produit dudit signal de différence déphasé de +Φ̂(n) et de la valeur conjuguée D'(n-q), des moyens de multiplication (41) pour pondérer le produit précédent par un coefficient a' petit par rapport à 1, des moyens enfin (47, 48) pour incrémenter dudit produit pondéré, à la cadence 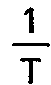 , ledit coefficient cq(n).

10. Dispositif selon l'une des revendications 1 à 9, destiné à annuler un signal d'écho formé d'un écho local linéaire de durée environ égale à NT et d'un écho lointain linéaire ou à phase variable pouvant s'étendre sur une durée environ égale à LT (L entier > N entier), caractérisé en ce qu'il comporte:
- des moyens de stockage (60) recevant à la cadence 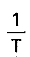 les échantillons du signal D(n) dans la première voie de transmission (2) et pouvant stocker L échantillons successifs (D(n) - D(n-L + 1)),
- des moyens de calcul pour former la somme des produits de ces L échantillons et des coefficients (dₒ-d_{L-1})
du filtre transversal de l'annuleur d'écho à phase variable, cette somme (F_{d}(n)) constituant le signal de sortie du filtre transversal de l'annuleur d'écho à phase variable,
- des moyens de calcul pour former la somme des produits des N derniers échantillons
(D(n) - D(n-N+ 1))
entrés dans lesdits moyens de stockage (60) et des coefficients
(Co - C_{N}-₁)
du filtre transversal de l'annuleur d'écho linéaire, cette somme (ε̂₁(n))constituant le signal de sortie du filtre transversal de l'annuleur d'écho linéaire.

## Patentansprüche

1. Echokompensationsanordnung zum Verarbeiten des in einer ersten Einrichtungsstrecke (2) auftretenden Signals (D(n)) zum Kompensieren eines zusammengesetzten Echosignals (_{f}(n)), das in einer zweiten Einrichtungsstrecke (4) in Antwort auf das genannte Signal in der ersten Strecke auftritt, wobei das genannte zusammengesetzte Echosignal durch mehrere Anteile mit unterschiedlichen Charakteristiken gebildet wird, wobei diese Anordnung durch ein Gefüge aus Echokompensatoren (27, 28) gebildet wird, deren Anzahl der Anzahl der genannten Anteile entspricht und die zwischen der ersten Strecke (2) und dem Subtrahiereingang der Differenzschaltungen (31), (38) liegen, die in Reihe in der zweiten Strecke (4) vorgesehen sind, wobei jeder Echokompensator (27, 28) ein Transversalfilter (29, 50) enthält mit einstellbaren Koeffizienten, die durch eine Koeffizientenregelschaltung (30, 36) eingestellt werden, wobei wenigstens ein Echokompensator (28) eine Schaltung zum Ausgleichen einer Charakteristik eines Anteils des Echosignals enthält, dadurch gekennzeichnet, daß die genannte Ausgleichsschaltung (51 oder 52) mit seiner Regelschaltung (37) entweder an den Addiereingang der betreffenden Differenzschaltung (38; Fig. 7) angeschlossen ist, wobei alle Regelschaltungen (30, 36, 37) des Gefüges aus Echokompensatoren (27, 28) gleichzeitig geregelt werden und wobei in jedem Echokompensator (27 oder 28) die Regelschaltungen (30, 36, 37) der Filterkoeffizienten und die genannte Ausgleichsschaltung automatisch geregelt werden um eine vorbestimmte Funktion des an dem Ausgang der Reihenschaltung der genannten Differenzschaltungen (31 und 38) auftretenden Restechosignals zu minimalisieren, oder an den Subtrahiereingang der betreffenden Differenzschaltung (38) angeschlossen wird, wobei alle Regelschaltungen (30, 36), (37) des Gefüges aus Echokompensatoren (27, 28) gleichzeitig geregelt werden und wobei in jedem Echokompensator (27 oder 28) die Regelschaltungen (30, 36, 37) der Filterkoeffizienten und die genannte Ausgleichsschaltung automatisch geregelt werden zum Minimalisieren einer vorbestimmten Funktion des Restechosignals, das an dem Ausgang der mit dem genannten Echokompensator (27 oder 28) verbundenen Differenzschaltung (31 oder 38; Fig. 2 und 5) oder an dem Ausgang der Reihenschaltung der genannten Differenzschaltungen (31 und 38; Fig. 6) erscheint.

2. Anordnung nach Anspruch 1 zum Kompensieren eines zusammengesetzten Echosignals, das aus einem linearen Anteil und einem phasenveränderlichen Anteil besteht, wobei die genannte Anordnung durch einen linearen Echokompensator (27) gebildet ist, dessen Differenzschaltung (31) einen mit dem Eingang der zweiten Einrichtungsstrecke (4) gekoppelten Addiereingang hat, und durch einen Echokompensator mit veränderlicher Phase (28), dessen Differenzschaltung (38) einen mit dem Ausgang der Differenzschaltung (31) des linearen Echokompensators (27) gekoppelten Addiereingang hat, wobei der Echokompensator mit veränderlicher Phase (35) eine Phasenausgleichsschaltung (51) enthält, die mit dem Subtrahiereingang der Differenzschaltung (38) verbunden ist, dadurch gekennzeichnet, daß die genannte Regelschaltung (30) zum Einstellen der Koeffizienten des Transversalfilters (29) der linearen Echokompensatoranordnung (27) für jeden einzustellenden Koeffizienten Cq(n) die folgenden Elemente enthält: Multipliziermittel (42) zum mit einer Geschwindigkeit von 1/T Bilden des Produktes aus dem das Restechosignal enthaltenden Differenzsignal und dem konjugierten Wert D^{*}(n-q) eines Abtastwertes D(n-q) eines komplexen Signals der ersten Strecke, das in dem Transversalfilter (29) gespeichert wird, Rechenmittel (44) zum mit einer Geschwindigkeit von 1 /MT (wobei M eine ganze Zahl größer als 1 ist) Bilden eines statistischen Mittelwertes lq(n) des vorhergehenden Produktes, Multipliziermittel (46) zum Bilden des Produktes alq(n), wobei aein Koeffizient kleiner als 1 ist, und zum Schluß Mittel (47,48) zum mit einer Geschwindigkeit von 1 /MT Vergrößern des genannten Koeffizienten Cq(n) um einen Betrag alq(n).

3. Anordnung nach Anspruch 2, dadurch gekennzeichnet, daß der genannte statistische Mittelwert lq(n) dadurch berechnet wird, daß mit einer Geschwindigkeit von 1 /MT die Summe der M Produkte aus dem das genannte Restechosignal enthaltenden Differenzsignal und dem konjugierten Wert D^{*}(n-q) gebildet wird.

4. Anordnung nach Anspruch 2, dadurch gekennzeichnet, daß die Regelschaltung (30) zum Einstellen der Koeffizienten des Transversalfilters (29) des linearen Echokompensators (27) für jeden einzustellenden Koeffizienten cq(n) u. a. die folgenden Elemente enthält: Rechenmittel (45) zum mit einer Geschwindigkeit von 1 /MPT (wobei P eine ganze Zahl größer als 1 ist) Bilden des zeitlichen Mittelwertes Jq(n) des statistischen Mittelwertes Iq(n), Multipliziermittel (46) zum Bilden des Produktes α · Jq(n), wobei a ein Koeffizient kleiner als 1 ist, und zum Schluß Mittel (47, 48) zum mit einer Geschwindigkeit von 1 /MPT Vergrößern des genannten Koeffizienten cq(n) um einen Betrag α · Jq(n).

5. Anordnung nach Anspruch 4, dadurch gekennzeichnet, daß der statistische Mittelwert Iq(n) dadurch berechnet wird, daß mit einer Geschwindigkeit von 1 /MT die Summe aus M Produkten aus dem das Restechosignal enthaltenden Differenzsignal und dem konjugierten Wert D^{*}(n-q) gebildet wird und der zeitliche Mittelwert Jq(n) dadurch berechnet wird, daß mit einer Geschwindigkeit von 1/MPT die Summe aus P Werten von Iq(n) gebildet wird.

6. Anordnung nach Anspruch 1 zum Kompensieren eines zusammengesetzten Echosignals, das aus einem linearen Anteil und einem phasenveränderlichen Anteil besteht, wobei die genannte Anordnung durch einen linearen Echokompensator (27) gebildet ist, dessen Differenzschaltung (31) einen mit dem Eingang der zweiten Einrichtungsstrecke (4) gekoppelten Addiereingang hat, und durch einen Echokompensator mit veränderlicher Phase (28), dessen Differenzschaltung (38) einen mit dem Ausgang der Differenzschaltung (31) des linearen Echokompensators (27) gekoppelten Addiereingang hat, wobei der Echokompensator mit veränderlicher Phase (28) eine #(n)-Phasenausgleichsschaltung (51) enthält, die mit dem Subtrahiereingang der Differenzschaltung (38) verbunden ist, dadurch gekennzeichnet, daß die Regelschaltung (30) zum Einstellen der Koeffizienten des Transversalfilters (29) des linearen Echokompensators (27) für jeden einzustellenden Koeffizienten cq(n) die folgenden Elemente enthält: Multipliziermittel (42) zum mit einer Geschwindigkeit von 1/T Bilden des Produktes aus dem das Restechosignal enthaltenden Differenzsignal und dem konjugierten Wert D^{*}(n-q) eines in dem Transversalfilter (29) gespeicherten Abtastwertes D(n-q), Multipliziermittel (46) zum Gewichten des vorhergehenden Produktes mit einem gegenüber 1 kleinen Koeffizienten a, und zum Schluß Mittel (47, 48) zum mit einer Geschwindigkeit von 1/T Vergrößern des genannten Koeffizienten cq(n) um das genannte gewichtete Produkt.

7. Anordnung nach Anspruch 1 zum Kompensieren eines zusammengesetzten Echosignals, das aus einem linearen Anteil und einem Anteil mit veränderlicher Phase besteht, wobei die genannte Anordnung durch einen linearen Echokompensator (27) gebildet ist, dessen Differenzschaltung (31) einen mit dem Eingang der zweiten Einrichtungsstrecke (4) gekoppelten Addiereingang hat, und durch einen Echokompensator (28) mit veränderlicher Phase, dessen Differenzschaltung (38) einen mit dem Ausgang der Differenzschaltung (31) des linearen Echokompensators (27) gekoppelten Addiereingang hat, wobei der Echokompensator (28) mit veränderlicher Phase eine Φ(n) Phasenausgleichsschaltung (52) enthält, die mit dem Addiereingang der Differenzschaltung (38) verbunden ist, wobei Φ(n) eine Phase ist, die durch die Regelschaltung (37) der genannten Ausgleichsschaltung gebildet wird um der Phase des veränderlichen Phasenanteils des zusammengesetzten Echosignals zu entsprechen, dadurch gekennzeichnet, daß die Anordnung eine Phasenverschiebungsschaltung (53) enthält mit über +Φ̂(n) Verschieben der Phase des Differenzsignals, das an dem Ausgang der Differenzschaltung (38) des Echokompensators (28) mit veränderlicher Phase auftritt, und daß die Regelschaltung (30) zum Einstellen der Koeffizienten des Transversalfilters (29) des linearen Echokompensators (27) für jeden einzustellenden Koeffizienten cq(n) die folgenden Elemente enthält: Multipliziermittel (42) zum mit einer Geschwindigkeit von 1 /T Bilden des Produktes aus dem genannten um + Φ (n) phasenverschobenen Differenzsignal und dem konjugierten Wert D^{*}(n-q) eines in dem Transversalfilter (29) gespeicherten Abtastwertes D(n-q), Mittel (44) zum mit einer Geschwindigkeit 1/MT (wobei M eine ganze Zahl größer als 1 ist) Bilden des statistischen Mittelwertes Iq(n) des vorhergehenden Produktes, Multipliziermittel (46) zum Bilden des Produktes a - Iq(n), wobei a ein Koeffizient klein gegenüber 1 ist, und zum Schluß Mittel (47,48) zum mit einer Geschwindigkeit von 1/MT Vergrößern des genannten Koeffizienten cq(n) um einen Betrag alq(n).

8. Anordnung nach Anspruch 7, dadurch gekennzeichnet, daß der genannte statistische Mittelwert Iq(n) dadurch berechnet wird, daß mit einer Geschwindigkeit von 1 /MT die Summe aus M Produkten des Differenzsignals, das über+Φ̂(n) phasenverschoben ist, und dem konjugierten Wert D*(n-q) gebildet wird.

9. Anordnung nach Anspruch 1, zum Kompensieren eines zusammengesetzten Echosignals, das aus einem linearen Anteil und einem Anteil mit veränderlicher Phase besteht, wobei die genannte Anordnung durch einen linearen Echokompensator (27) gebildet ist, dessen Differenzschaltung (31) einen mit dem Eingang einer zweiten Einrichtungsstrecke (4) gekoppelten Addiereingang hat, und durch einen Echokompensator (28) mit veränderlicher Phase, dessen Differenzschaltung (38) einen mit dem Ausgang der Differenzschaltung (31) des linearen Echokompensators (27) gekoppelten Addiereingang hat, wobei der Echokompensator (28) mit veränderlicher Phase eine -Φ̂(n)-Phasenausgleichsschaltung (52) enthält, die mit dem Addiereingang der Differenzschaltung (38) verbunden ist, dadurch gekennzeichnet, daß die Anordnung eine Phasenverschiebungsschaltung (53) enthält zum über + Φ(n) Verschieben der Phase des Differenzsignals, das an dem Ausgang der Differenzschaltung (38) des Echokompensators (28) mit veränderlicher Phase auftritt, und daß die Regelschaltung (30) zum Einstellen der Koeffizienten des Transversalfilters (29) des linearen Echokompensators (27) für jeden einzustellenden Koeffizienten cq(n) die folgenden Elemente enthält: Rechenmittel (42) zum mit einer Geschwindigkeit von 1/T Bilden des Produktes aus dem genannten um +Φ̂(n) phasenverschobenen Differenzsignal und dem konjugierten Wert D^{*}(n-q), Mültipliziermittel (46) zum Gewichten des vorhergehenden Produktes mit einem gegenüber 1 kleinen Koeffizienten a, und zum Schluß Mittel (47,48) zum mit einer Geschwindigkeit von 1 /T Vergrößern des genannten Koeffizienten cq(n) um das genannte gewichtete Produkt.

10. Anordnung nach einem der Ansprüche 1 bis 9, zum Kompensieren eines Echosignals, das aus einem linearen örtlichen Echosignal mit einer Dauer nahezu gleich NT und aus einem fernen Echosignal besteht, das linear ist oder eine veränderliche Phase hat und eine Dauer aufweisen kann von etwa gleich LT (wobei L eine ganze Zahl größer als die ganze Zahl N ist), dadurch gekennzeichnet, daß sie die folgenden Elemente enthält:
- Speichermittel (60) zum mit einer Geschwindigkeit von 1/T Empfangen von Abtastwerten des Signals D(n) in der ersten Einrichtungsstrecke (2) und zum Speichern von L aufeinanderfolgenden Abtastwerten (D(n)) - D(n-L+ 1 )),
- Rechenmittel zum Bilden der Summe der Produkte dieser L Abtastwerte und Koeffizienten (dₒ - d_{L-1}) des Transversalfilters des Echokompensators mit veränderlicher Phase, wobei diese Summe (ε̂_{d}(n)) das Ausgangssignal des Transversalfilters des Echokompensators mit veränderlicher Phase bildet,
- Rechenmittel zum Bilden der Summe der Produkte der N letzten Abtastwerte (D(n) - D(n-N+1)), die als letzteren in die gesamten Speichermittel (60) eingeführt sind, und der Koeffizient (Co - C_{N-1} des Transversalfilters des linearen Echokompensators, wobei diese Summe (ε̂ₗ(n)) das Ausgangssignal des Transversalfilters des linearen Echokompensators bildet.

## Claims

1. An echo cancelling arrangement processing the signal (D(n)) occurring in a first one-way path (2) for cancelling a composite echo signal (e(n)) occurring in a second one-way path (4) in response to said signal in the first path, said composite echo signal being formed by several components having different characteristics, this arrangement being formed by an ensemble of echo cancellers (27, 28), the number of which is equal to the number of said components and which are connected between the first path (2) and the subtractive input of the difference circuits (31 (38) arranged in cascade in the second path (4), each echo canceller (27, 28) comprising a transversal filter (29, 50) having adjustable coefficients controlled by a coefficients-control circuit (30, 36) while at least one echo canceller (28) comprises a circuit for compensating a characteristic of a component of the echo signal, characterized in that said compensating circuit (51 or 52) comprising a control circuit (37) is arranged either at the additive input of the corresponding difference circuit (38; Fig. 7), all the control circuits (30, 36, 37) of the ensemble of echo cancellers (27, 28) being controlled simultaneously and, in each echo canceller (27 or 28), the control circuits (30, 36, 37) of the filter coefficients and said compensating circuit being controlled automatically so as to minimize a predetermined function of the residual echo signal appearing at the output of the cascade arrangement of said difference circuits (31 and 38), or at the subtractive input of the corresponding difference circuit (38), all the control circuits (30, 36), (37) of the ensemble of echo cancellers (27, 28) being controlled simultaneously and, in each echo canceller (27 or 28), the control circuits (30, 36, 37) of the filter coefficients and said compensating circuit being controlled automatically so as to minimize a predetermined function of the residual echo signal appearing at the output of the difference circuit (31 or 38; Figs. 2 and 5) connected to said echo canceller (27 or 28), or to the output of the cascade arrangement of said difference circuits (31 and 38; Fig. 6).

2. An arrangement as claimed in Claim 1 for cancelling a composite echo signal comprised of a linear component and a variable-phase component, said arrangement being formed by a linear echo canceller (27) whose difference circuit (31) has its additive input coupled to the input of the second one-way path (4), and a variablephase echo canceller (28) whose difference circuit (38) has its additive input coupled to the output of the difference circuit (31 ) of the linear echo canceller (27), the variablephase echo canceller (35) comprising a phase compensating circuit (51) arranged at the subtractive input of its difference circuit (38), characterized in that said control circuit (30) for adjusting the coefficients of the transversal filter (29) of the linear echo canceller (27) comprises, for each coefficient Cq(n) to be adjusted, multiplying means (42) for forming at a rate 1 /T the product of the difference signal containing the residual echo signal and the complex conjugate value D^{*}(n-q) of a sample D(n-q) of the complex signal of the first path which is stored in the transversal filter (29), calculation means (44) for forming at a rate 1/MT (where M is an integer greater than 1) a statistical average Iq(n) of the preceding product, multiplying means (46) for forming the product a Iq(n) where a is a coefficient less than 1, and finally means (47, 48) for incrementing at a rate 1/MT said coefficient Cq(n) by an amount alq(n).

3. An arrangement as claimed in Claim 2, characterized in that said statictical average lq(n) is calculated by forming at a rate 1 /MT, the sum of the M products of the difference signal containing said residual echo signal and the complex conjugate value D^{*}(n-q).

4. An arrangement as claimed in Claim 2, characterized in that the control circuit (30) for adjusting the coefficients of the transversal filter (29) of the linear echo canceller (27) comprises inter alia, for each coefficient cq(n) to be adjusted, calculation means (45) for forming at a rate 1 /MPT (where P is an integer greater than 1) the time average Jq(n) of the statistical average Iq(n), multiplying means (46) for forming the product α · Jq(n), where a is a coefficient less than 1, and finally means (47, 48) for incrementing at a rate 1/MPT said coefficient cq(n) by an amount α · Jq(n).

5. An arrangement as claimed in Claim 4, characterized in that the statistical average Iq(n) is calculated by forming at a rate 1/MT the sum of M products of the difference signal containing the residual echo signal and the complex conjugate value D^{*}(n-q), and the time average Jq(n) is calculated by forming at a rate 1/MPT the sum of P values of lq(n).

6. An arrangement as claimed in Claim 1 for cancelling a composite echo signal comprised of a linear component and a variable-phase component, said arrangement being formed by a linear echo canceller (27) whose difference circuit (31) has its additive input coupled to the input of the second one-way path (4), and a variable-phase echo canceller (28) whose difference circuit (38) has its additive input coupled to the output of the difference circuit (31) of the linear echo canceller (27), the variable-phase echo canceller (28) comprising a Φ̂(n) phase compensating circuit (51) arranged at the subtractive input of its difference circuit (38), characterized in that the control circuit (30) for adjusting the coefficients of the transversal filter (29) of the linear echo canceller (27) comprises, for each coefficient cq(n) to be adjusted, multiplying means (42) for forming at a rate 1/Tthe product of the difference signal containing the residual echo signal and the complex conjugate value D^{*}(n-q) of a sample D(n-q) stored in the transversal filter (29), multiplying means (46) for weighting the preceding product with a coefficient a which is small relative to 1, and finally means (47, 48) for incrementing at a rate 1 /T said coefficient cq(n) by said weighted product.

7. An arrangement as claimed in Claim 1 for cancelling a composite echo signal comprised of a linear component and a variable-phase component, said arrangement being formed by a linear echo canceller (27) whose difference circuit (31) has its additive input coupled to the input of the second one-way path (4), and a variable-phase echo canceller (28) whose difference circuit (38) has its additive input coupled to the output of the difference circuit (31) of the linear echo canceller (27), the variable-phase echo canceller (28) comprising a -Φ̂(n) phase compensation circuit (52) arranged at the additive input of its difference circuit (38), Φ(n) being a phase formed by the control circuit (37) of said compensating circuit for being equal to the phase of the variable-phase component of the composite echo signal, characterized in that it comprises a phase-shifting circuit (53) for shifting through +Φ(n) the phase of the difference signal appearing at the output of the difference circuit (38) of the variable-phase echo canceller (28), and in that the control circuit (30) for adjusting the coefficients of the transversal filter (29) of the linear echo canceller (27) comprises, for each coefficient cq(n) to be adjusted, multiplying means (42) for forming at a rate 1 /T the product of said difference signal phase-shifted through +Φ(n) and the complex conjugate value D^{*}(n-q) of a sample D(n-q) stored in the transversal filter (29), means (44) for forming at a rate 1 /MT (where M is an integer greater than 1) the statistical average Iq(n) of the preceding product, multiplying means (46) for forming the product α. Iq(n), where a is a coefficient less than 1, and finally means (47,48) for incrementing at a rate 1 /MT said coefficient cq(n) by an amount alq(n).

8. An arrangement as claimed in Claim 7, characterized in that said statistical average lq(n) is calculated by forming at a rate 1/MT the sum of M products of the difference signal phase-shifted through +Φ(n) and the complex conjugate value D^{*}(n-q).

9. An arrangement as claimed in Claim 1 for cancelling a composite echo signal comprised of a linear component and a variable-phase component, said arrangement being formed by a linear echo canceller (27) whose difference circuit (31) has its additive input coupled to the input of the second one-way path (4) and a variable-phase echo canceller (28) whose difference circuit (38) has its additive input coupled to the output of the difference circuit (31 ) of the linear echo canceller (27), the variable-phase echo canceller (28) comprising a -Φ(n) phase compensating circuit (52) arranged at the additive input of its difference circuit (38), characterized in that it comprises a phase-shifting circuit (53) for shifting through + Φ(n) the phase of the difference signal appearing at the output of the difference circuit (38) of the variable-phase echo canceller (28), and in that the control circuit (30) for adjusting the coefficients of the transversal filter (29) of the linear echo canceller (27) comprises, for each coefficient cq(n) to be adjusted, calculation means (42) for forming at a rate 1/T the product of said +Φ(n)-phase shifted difference signal and the complex conjugate value D^{*}(n-q), multiplying means (46) for weighting the preceding product with a coefficient a which is small relative to 1, and finally means (47, 48) for incrementing at a rate 1/T said coefficient cq(n) by said weighted product.

10. An arrangement as claimed in any of the Claims 1 to 9, for cancelling an echo signal comprised of a linear local echo having a duration approximately equal to NT and by a far echo which is linear or has a variable-phase and may extend over a duration approximately equal to LT (where L is an integer greater than the integer N), characterized in that it comprises:
- storage means (60) for receiving at a rate 1/T samples of the signal D(n) in the first one-way path (2) and storing L consecutive samples (D(n) - D(n-(L+ 1 )),
- calculation means for forming the sum of the products of these L samples and coefficients (dₒ - d_{L-1}) of the transversal filter of the variable-phase echo canceller, this sum (ε̂_{d}(n)) constituting the output signal of the transversal filter of the variable-phase echo canceller,
- calculation means for forming the sum of the products of the N last samples 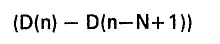 entered into said storage means (60) and the coefficients (Cₒ - C_{N-l}) of the transversal filter of the linear echo canceller, this sum (ε̂ₗ(n)) constituting the output signal of the transversal filter of the linear echo canceller.
